(19) Europäisches Patentamt
European Patent Office
Office européen des brevets

(11) **EP 3 850 594 B1**

(12) **EUROPÄISCHE PATENTSCHRIFT**

| | |
|---|---|
| (45) Veröffentlichungstag und Bekanntmachung des Hinweises auf die Patenterteilung:<br>**11.03.2026 Patentblatt 2026/11** | (51) Internationale Patentklassifikation (IPC):<br>***G07D 7/12*** *(2016.01)* ***C09K 11/77*** *(2006.01)*<br>***G07D 7/121*** *(2016.01)* ***G07D 7/1205*** *(2016.01)*<br>***B42D 25/382*** *(2014.01)* |
| (21) Anmeldenummer: **19769383.1** | |
| (22) Anmeldetag: **10.09.2019** | (52) Gemeinsame Patentklassifikation (CPC):<br>**G07D 7/12; B42D 25/382; C09K 11/7771;<br>C09K 11/7774; C09K 11/7776; C09K 11/7777;<br>G07D 7/1205; G07D 7/121** |
| | (86) Internationale Anmeldenummer:<br>**PCT/EP2019/025302** |
| | (87) Internationale Veröffentlichungsnummer:<br>**WO 2020/052812 (19.03.2020 Gazette 2020/12)** |

(54) **WERTDOKUMENTSYSTEM**

VALUABLE DOCUMENT SYSTEM

SYSTÈME DE DOCUMENTS DE VALEUR

| | |
|---|---|
| (84) Benannte Vertragsstaaten:<br>**AL AT BE BG CH CY CZ DE DK EE ES FI FR GB<br>GR HR HU IE IS IT LI LT LU LV MC MK MT NL NO<br>PL PT RO RS SE SI SK SM TR** | (72) Erfinder: **KECHT, Johann<br>81677 München (DE)** |
| (30) Priorität: **14.09.2018 DE 102018007289** | (74) Vertreter: **Giesecke+Devrient IP<br>Prinzregentenstraße 161<br>81677 München (DE)** |
| (43) Veröffentlichungstag der Anmeldung:<br>**21.07.2021 Patentblatt 2021/29** | (56) Entgegenhaltungen:<br>**WO-A1-2006/024530 WO-A1-2006/024530<br>US-A1- 2008 116 272 US-A1- 2010 026 991<br>US-A1- 2010 026 991 US-A1- 2015 115 177** |
| (73) Patentinhaber: **Giesecke+Devrient Currency Technology GmbH<br>81677 München (DE)** | |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Wertdokumentsystem, umfassend wenigstens ein erstes Wertdokument und ein zweites Wertdokument, ein Verfahren zum Identifizieren eines Wertdokuments eines Wertdokumentsystems und ein Lumineszenzstoff-Set zur Herstellung eines Wertdokumentsystems.

Unter Wertdokumenten werden blattförmige Gegenstände verstanden, die beispielsweise einen monetären Wert oder eine Berechtigung repräsentieren, und daher nicht beliebig durch Unbefugte herstellbar sein sollen. Sie weisen daher nicht einfach herzustellende, insbesondere zu kopierende, Sicherheitsmerkmale auf, deren Vorhandensein ein Indiz für die Echtheit, d.h. die Herstellung durch eine dazu befugte Stelle, ist. Wichtige Beispiele für solche Wertdokumente sind Chipkarten, Coupons, Gutscheine, Schecks und insbesondere Banknoten, Aktien, Wertmarken, Ausweise, Kreditkarten und Pässe sowie Etiketten, Siegel, Verpackungen oder andere Gegenstände für die Wertsicherung.

Wertdokumente werden in aller Regel durch eine spezielle Kennzeichnung gegen eine unerwünschte und gegebenenfalls gesetzwidrige Vervielfältigung geschützt. Es ist seit langem bekannt, Wertdokumente zu diesem Zweck mit Lumineszenzstoffen zu versehen, die ein spezifisches Emissionsverhalten aufweisen. Bekannt ist insbesondere die Verwendung von Sicherheitsmerkmalen aus einer Kombination verschiedener Lumineszenzstoffe und die Bestimmung und Auswertung der Lumineszenz-Abklingzeit zur Prüfung von Wertdokumenten.

Wertdokumentsysteme, in welchen Wertdokumente durch unterschiedliche Sicherheitsmerkmale in unterschiedliche Klassen aufgeteilt und voneinander unterschieden werden, sind prinzipiell bekannt. Sicherheitsmerkmale basierend auf zwei oder mehr teilweise in ihrem Emissionsspektrum oder Anregungsspektrum überlappenden Lumineszenzstoffen sind ebenfalls prinzipiell bekannt. Beispielsweise zeigt EP 2 512 821 B1 Wertdokumente mit Stoffmischungen aus Oxysulfiden, Phosphaten und Vanadaten und EP 2 271 504 B1 Stoffmischungen.

Beispielsweise verwendet ein Wertdokumentsystem gemäß dem Stand der Technik meistens mehrere, unterschiedliche Lumineszenzstoffe mit jeweils unterschiedlichen Emissionsspektren. Bei den Lumineszenzstoffen handelt es sich dabei um Einzelstoffe, welche aus einer dotierten Matrix bestehen und je nach Zusammensetzung der Matrix ein unterschiedliches Emissionsspektrum zeigen. Das Emissionsspektrum wird durch einen Sensor über mehrere Spektralkanäle detektiert und daraus ein Rückschluss über die verwendete Stoffklasse erlangt. Die Trennung in unterschiedliche Wertdokumentklassen erfolgt dann über Zuweisung dieser Stoffklassen, gegebenenfalls durch Zuhilfenahme der detektierten Lumineszenz-Abklingzeiten.

Die Dokumente des Standes der Technik zeigen Möglichkeiten zur Echtheitsprüfung von Wertdokumenten und zu deren Absicherung auf. Bei der Prüfung wird das Vorhandensein des entsprechenden Sicherheitsmerkmals geprüft und basierend auf den Prüfergebnissen auf die Echtheit des Wertdokuments geschlossen.

Die WO 2006/024530 A1 beschreibt ein Wertdokument mit lumineszenten Eigenschaften, sowie ein Wertdokumentsystem, wobei die Wertdokumente des Systems durch unterschiedliche Kombinationen von Lumineszenzstoffen unterscheidbar sind.

Die US 2010/026991 A1 beschreibt ein Echtheitsmerkmal in Form von zwei lumineszierenden Substanzen.

Es ist demnach eine Aufgabe der Erfindung, die Sicherheit von Wertdokumenten zu erhöhen, insbesondere, ohne dabei die Komplexität bzw. Herstellkosten der zur Echtheitsprüfung benötigten Sensorik stark zu erhöhen.

Die Aufgabe wird durch ein Wertdokumentsystem, ein Verfahren zur Identifikation eines Wertdokuments und ein Lumineszenzstoff-Set gemäß den unabhängigen Ansprüchen gelöst. Besonders vorteilhafte Ausgestaltungen sind Gegenstand der abhängigen Ansprüche.

Ein Wertdokumentsystem gemäß der Erfindung weist wenigstens zwei Wertdokumente auf, nämlich wenigstens ein erstes Wertdokument und ein zweites Wertdokument.

Das erste Wertdokument weist ein Sicherheitsmerkmal aus einer Kombination von mindestens einem ersten und einem zweiten Lumineszenzstoff auf. Der erste Lumineszenzstoff des Sicherheitsmerkmals des ersten Wertdokuments ist ein Lumineszenzstoff einer ersten Stoffklasse und der zweite Lumineszenzstoff des ersten Wertdokuments ist ein Lumineszenzstoff einer zweiten Stoffklasse. Zudem weisen der erste und zweite Lumineszenzstoff des Sicherheitsmerkmals des ersten Wertdokuments teilweise überlappende Emissionsspektren auf. Der erste und zweite Lumineszenzstoff des Sicherheitsmerkmals des ersten Wertdokuments weisen darüber hinaus eine Abklingzeit von weniger als 5 ms auf.

Das zweite Wertdokument weist ein Sicherheitsmerkmal mit wenigstens einem ersten Lumineszenzstoff auf. Der erste Lumineszenzstoff des zweiten Wertdokuments gehört der ersten Stoffklasse oder der zweiten Stoffklasse an. Die Abklingzeit des ersten Lumineszenzstoffs des zweiten Wertdokuments beträgt maximal 5 ms.

Der erste und zweite Lumineszenzstoff des Sicherheitsmerkmals des ersten Wertdokuments sind so ausgebildet, dass ihre Emissionsspektren teilweise überlappen und der durch die überlappenden Emissionsspektren gebildete primäre Emissionsbereich in zwei unterschiedliche, unmittelbar benachbarte Spektralbereiche aufteilbar ist. Dabei sind die zwei benachbarten Spektralbereiche, nämlich der erste Spektralbereich A (von $\lambda_{A1}$ bis $\lambda_{A2}$) und der zweite Spektralbereich B (von $\lambda_{B1}$ bis $\lambda_{B2}$), jeweils größer als 50 nm und kleiner als 500 nm und wenigstens einer der zwei benachbarten Spektralbereiche umfasst zumindest einen Teil der Emission des ersten und zweiten Lumineszenzstoffs des Sicherheitsmerkmals des ersten Wertdokuments.

Die Emission des Sicherheitsmerkmals des zweiten Wertdokuments liegt zumindest teilweise, das heißt zu mindestens 1% ihrer Intensität, in mindestens einem der benachbarten Spektralbereiche A, B. Bevorzugt ist die Gesamtintensität $I_A^{W2} + I_B^{W2}$ der Emission des Sicherheitsmerkmals des zweiten Wertdokuments in den Spektralbereichen A und B ähnlich groß wie die Gesamtintensität $I_A^{W1} + I_B^{W1}$ der Emission des Sicherheitsmerkmals des ersten Wertdokuments, d.h.

$$0{,}1 < (I_A^{W2} + I_B^{W2})/(I_A^{W1} + I_B^{W1}) < 10.$$

Dabei ist $I_A^{W1} = \int_{\lambda A1}^{\lambda A} I_{ges}^{W1'}(x)dx$, $I_B^{W1} = \int_{\lambda B}^{\lambda B2} I_{ges}^{W1'}(x)dx$, $I_A^{W2} = \int_{\lambda A1}^{\lambda A2} I_{ges}^{W2'}(x)dx$ und $I_B^{W2} = \int_{\lambda B1}^{\lambda B2} I_{ges}^{W2'}(x)dx$, wobei $I_{ges}^{W1'}(x)$ bzw. $I_{ges}^{W2'}(x)$ das Emissionsspektrum des ersten bzw. zweiten Wertdokuments ist. **In** einer bevorzugten Ausgestaltung beziehen sich $I_A^{W1}, I_B^{W1}, I_A^{W2}$ und $I_B^{W2}$ auf einen bestimmten, insbesondere gleichen, Messzeitpunkt.

Das Sicherheitsmerkmal des zweiten Wertdokuments weist gegenüber dem Sicherheitsmerkmal des ersten Wertdokuments ein unterschiedliches Intensitätsverhältnis der Emission, ein unterschiedliches Abklingzeitverhältnis und/ oder eine unterschiedliche Abklingzeitsumme in den Spektralbereichen A, B auf. Dem unterschiedlichen Intensitätsverhältnis der Emission, dem unterschiedlichen Abklingzeitverhältnis und/ oder der unterschiedlichen Abklingzeitsumme in den Spektralbereichen A, B des ersten und zweiten Wertdokuments ist eine Kodierung des Sicherheitsmerkmals und/ oder eine Wertdokumentenkennung des ersten und/ oder zweiten Wertdokuments zugeordnet. Dabei gilt:
Das Intensitätsverhältnis der Emission U eines Sicherheitsmerkmals des ersten bzw. zweiten Wertdokuments ist der Quotient aus der Gesamtintensität der entsprechenden Lumineszenzstoffe in den Spektralbereichen A und B:

$$U_{AB} = I_A/I_B$$

Das Abklingzeitverhältnis V eines Sicherheitsmerkmals des ersten bzw. zweiten Wertdokuments ist der Quotient der jeweiligen Gesamtabklingzeiten $\tau_A$ bzw. $\tau_B$ in den Spektralbereichen A und B:

$$V_{AB} = \tau_A/\tau_B$$

Dabei ist $\tau_A$ ein Maß für die Abklingzeit von $I_A$ und $\tau_B$ ein Maß für die Abklingzeit von $I_B$. Zum Ermitteln von $\tau_A$ bzw. $\tau_B$, kann beispielsweise

- Ein Quotient der Werte von $I_A$ bzw. $I_B$ zu zwei Zeitpunkten ermittelt werden
- Eine mathematische Funktion an den Zeitverlauf von $I_A$ bzw. $I_B$ angepasst werden, oder
- Ermittelt werden, zu welchem Zeitpunkt $I_A$ bzw. $I_B$ einen vorgegebenen Schwellenwert unterschreitet.

Die Abklingzeitsumme S ist die Summe der Gesamtabklingzeiten $\tau_A$ bzw. $\tau_B$ in den zwei Spektralbereichen A und B eines Sicherheitsmerkmals des ersten und/ oder ggf. des zweiten Wertdokuments:

$$S_{AB} = \tau_A + \tau_B$$

Die verschiedenen Sicherheitsmerkmale des Wertdokumentsystems unterscheiden sich dabei in ihrem Intensitätsverhältnis U und/oder in ihrem Abklingzeitverhältnis V und/oder in ihrer Abklingzeitsumme S.

Die erste Stoffklasse umfasst Lumineszenzstoffe mit dotierter Granatstruktur, insbesondere Yttrium-Aluminium-Granate (YAG), Lutetium-Aluminium-Granate (LuAG), Gadolinium-Gallium-Granate (GGG), Gadolinium-Scandium-Gallium-Granate (GSGG), Yttrium-Scandium-Gallium-Granate (YSGG), Calcium-Niob-Gallium-Granate (CNGG), Gadolinium-Scandium-Aluminium-Granate (GSAG), Calcium-Lithium-Niob-Gallium-Granate (CLNGG), übergangsmetallhaltige Granatstrukturen, wie beispielsweise Yttrium-Eisen-Granate (YIG) oder andere Varianten bzw. Mischvarianten solcher Granatstrukturen. Die zweite Stoffklasse umfasst Lumineszenzstoffe mit dotiertem Seltenerd-Oxysulfid, dotiertem Seltenerd-Phosphat oder dotiertem Seltenerd-Vanadat.

Bei den Seltenerd-Phosphaten handelt es sich dabei explizit um Orthophosphate eines oder mehrerer dreiwertiger Seltenerdkationen X, d.h. $XPO_4$, im Gegensatz zu anderen im Stand der Technik als Matrix für Lumineszenzstoffe verwendeten Phosphaten wie z.B. Pyrophosphaten, Polyphosphaten des Typs $X(PO_3)_3$, Ultraphosphaten des Typs $XP_5O_{14}$, und weiteren anderen Phosphaten.

Ebenso handelt es sich analog bei den Seltenerd-Vanadaten explizit um Orthovanadate eines oder mehrerer dreiwertiger Seltenerdkationen X, d.h. $XVO_4$.

Geeignete Seltenerd-Oxysulfide sind beispielsweise Lanthanoxysulfide, Yttriumoxysulfide, Gadoliniumoxysulfide, Lutetiumoxysulfide oder darauf basierende Mischoxysulfide. Geeignete Seltenerdphosphate sind beispielsweise Lanthanphosphate, Yttriumphosphate, Gadoliniumphosphate, Lutetiumphosphate oder darauf basierende Mischphosphate. Geeignete Seltenerdvanadate sind beispielsweise Lanthanvanadate, Yttriumvanadate, Gadoliniumvanadate, Lutetiumvanadate oder darauf basierende Mischvanadate.

Für anorganische Lumineszenzstoffe sind gemäß dem Stand der Technik zahlreiche Matrizen bekannt. Beispielsweise Oxide, insbesondere 3- und 4-wertige Oxide wie z. B. Titanoxid, Aluminiumoxid, Eisenoxid, Boroxid, Yttriumoxid, Ceroxid, Zirconoxid, Bismutoxid, sowie komplexere Oxide wie z. B. Perowskite, darunter unter anderem Yttrium-Aluminium-Perowskit, Lanthan-Gallium-Perowskit; Spinelle, darunter unter anderem Zink-Aluminium-Spinelle, Magnesium-Aluminium-Spinelle, Mangan-Eisen-Spinelle; oder Mischoxide wie z.B. ITO (Indiumzinnoxid);

Oxyhalogenide und Oxychalkogenide, insbesondere Oxychloride wie z. B. Yttriumoxychlorid, Lanthanoxychlorid; Sulfide und andere Chalkogenide, z.B. Zinksulfid, Cadmiumsulfid, Zinkselenid, Cadmiumselenid; Sulfate, insbesondere Bariumsulfat und Strontiumsulfat;
Erdalkaliphosphate, insbesondere Bariumphosphat, Strontiumphosphat, Calciumphosphat, sowie komplexere phosphatbasierte Verbindungen wie z.B. Apatite, darunter unter anderem Calciumhydroxylapatite, Calciumfluoroapatite, Calciumchloroapatite; oder Spodiosite, darunter z.B. Calcium-Fluoro-Spodiosite, Calcium-Chloro-Spodiosite; Silicate und Aluminosilicate, insbesondere Zeolithe wie z.B. Zeolith A, Zeolith Y; zeolithverwandte Verbindungen wie z.B. Sodalithe; Feldspate wie z.B. Alkalifeldspate, Plagioklase;
weitere anorganische Verbindungsklassen wie z.B. Germanate, Arsenate, Niobate, Tantalate, Wolframate oder Aluminate.

Jedoch kann mit diesen Stoffen kein erfindungsgemäßes Wertdokumentsystem mit den genannten vorteilhaften Eigenschaften erzeugt werden. Dies ist nur möglich durch Auswahl der oben genannten speziellen Stoffklassen mit komplementären spektralen Eigenschaften, wie im Folgenden beschrieben wird.

Zum Aufbau des erfindungsgemäßen Wertdokumentsystems können somit nicht beliebige Lumineszenzstoffe miteinander kombiniert werden. Vielmehr ist im Rahmen der Erfindung eine gezielte Auswahl notwendig, um jeweils komplementäre spektrale Eigenschaften so zu kombinieren, dass eine Vielzahl an geeigneten Kodierungen entsteht. Komplementäre spektrale Eigenschaften bedeutet, dass die verschiedenen Lumineszenzstoffe aufgrund ihrer unterschiedlichen spektralen Eigenschaften unterschieden werden können. Dies bedeutet beispielsweise das unmittelbar bzw. direkt benachbarten Intensitätsmaxima voneinander verschiedener Lumineszenzstoffe mit Sensoren mit einer Auflösung von > 50nm, sich um mehr als 50 nm signifikant voneinander unterscheiden.

Für anorganische Lumineszenzstoffe sind gemäß dem Stand der Technik zahlreiche Dotierstoffe bekannt, beispielsweise die Seltenen Erden: Ce, Pr, Nd, Sm, Eu, Gd, Tb, Dy, Ho, Er, Tm, Yb, Lu, sowie weitere Dotierstoffe Bi, Pb, Ni, Sn, Sb, W, Tl, Ag, Cu, Zn, Ti, Mn, Cr und V (bzw. deren Ionen). Die Dotierstoffe werden dabei einzeln oder in Kombination (z.B. als Kodotierung) eingesetzt.

Erfindungsgemäße Lumineszenzstoffe erfordern mindestens einen Dotierstoff aus der Gruppe Nd, Yb, Er, Tm, Ho. Bevorzugt enthalten die Lumineszenzstoffe mindestens Ytterbium oder Neodym oder Erbium als Dotierstoff, besonders bevorzugt Ytterbium oder Neodym, da hier aufgrund des Wellenlängenbereichs der Emission eine besonders gute Nachweisbarkeit durch einen einfach aufgebauten Detektor gegeben ist. Vorzugsweise sind neben dem Dotierstoff aus der Gruppe Nd, Yb, Er, Tm, Ho noch weitere (beliebige) Dotierstoffe vorhanden. Dabei wirken die Dotierstoffe aus der Gruppe Nd, Yb, Er, Tm, Ho als Emissionszentren der hier beschriebenen Lumineszenzstoffe. Bevorzugt sind Nd, Yb oder Er die Emissionszentren der Lumineszenzstoffe, besonders bevorzugt Nd oder Yb. Der Begriff "Emissionszentrum" bedeutet dabei, dass die Emission des Lumineszenzstoffs von diesem Dotierstoff ausgeht. Beispielsweise bildet bei einem typischen Energietransfer von Neodym (Nd) auf Ytterbium (Yb) bei Anregung des Neodyms das Ytterbium das Emissionszentrum, da hier die Emission des Neodyms durch den Energietransfer unterdrückt wird. Ebenso bildet beispielsweise bei einer mit Erbium dotierten Matrix, in welcher Praseodym als Kodotierung zugesetzt wurde, um die Abklingzeit einzustellen, ohne dabei selbst maßgeblich zu lumineszieren, das Lumineszenz emittierende Erbium das Emissionszentrum.

Erfindungsgemäße Sicherheitsmerkmale des ersten Wertdokuments sind daher eine Stoffmischung aus mindestens einem Lumineszenzstoff aus der ersten Stoffklasse und mindestens einem Lumineszenzstoff aus der zweiten Stoffklasse, welche im Folgenden beschrieben werden.

Bei einer Ausgestaltung kann es sich bei dem Sicherheitsmerkmal des ersten und/ oder gegebenenfalls zweiten Wertdokuments um eine Mischung aus Lumineszenzstoffen der ersten und/ oder zweiten Stoffklasse handeln, wobei zusätzlich weitere Lumineszenzstoffe enthalten sind, die weder der ersten noch der zweiten Stoffklasse angehören. Hierdurch kann z.B. der spektrale Verlauf des Emissionsspektrums feineingestellt werden, oder die Anzahl an Kodierungen weiter erhöht werden.

Bevorzugt zeigen die Lumineszenzstoffe im Wesentlichen (<5% rel. Intensität) keine zusätzliche Anti-Stokes-Emission. Hierdurch wird unter anderem verhindert, dass das Sicherheitsmerkmal durch Infrarot-Laserpointer oder ähnliche Geräte zur Detektion von Upconversion sichtbar gemacht werden kann.

Durch Kombination des mindestens ersten und zweiten Lumineszenzstoffs im Sicherheitsmerkmal des ersten und gegebenenfalls zweiten Wertdokuments kann eine hohe Anzahl an Kodierungen generiert werden. Basierend auf der gebildeten Kodierung kann das Sicherheitsmerkmal einer Wertdokumentklasse, beispielsweise einer Denomination und/ oder einem Wert zugeordnet werden. Das heißt, es wird nicht nur nach einem bestimmten Sicherheitsmerkmal auf einem Wertdokument geprüft, sondern ob das Wertdokument der Kodierung oder der Wertdokumentenklasse, welche durch das erkannte Sicherheitsmerkmal identifiziert und zugeordnet wird, entspricht. Die Wertdokumentenkennung oder die Kodierung des Sicherheitsmerkmals des ersten und zweiten Wertdokuments kann einem Banknotenwert und/ oder einem Herstellungsland zugeordnet sein, oder auch insbesondere in Kombination mit anderen Informationen die Echtheit des ersten bzw. zweiten Wertdokuments bezeugen.

Beim Sicherheitsmerkmal des ersten Wertdokuments handelt es sich um wenigstens den ersten und zweiten Lumineszenzstoff in einem definierbaren bzw. definierten Mengenverhältnis in Kombination (vorzugsweise in Form einer Mischung). Dies bedeutet, dass der erste und zweite Lumineszenzstoff des ersten Wertdokuments in einem definierbaren bzw. definierten relativen Mengenanteil, bezogen auf die Gesamtmenge der Lumineszenzstoffe, in dem Sicherheitsmerkmal vorhanden ist. Das Sicherheitsmerkmal kann somit in eindeutiger Weise identifiziert werden.

Der wenigstens erste und zweite Lumineszenzstoff des ersten Wertdokuments und der wenigstens erste Lumineszenzstoff des zweiten Wertdokuments können auf verschiedene Art und Weise in das erste bzw. zweite Wertdokument ein- oder an diesem angebracht werden. Sie können beispielsweise einer Papier- oder Kunststoffmasse zum Herstellen des ersten bzw. zweiten Wertdokuments oder einer Druckfarbe zum Bedrucken des ersten bzw. zweiten Wertdokuments zugemischt werden. Denkbar ist auch, den ersten und / oder zweiten Lumineszenzstoff des ersten Wertdokuments bzw. den wenigstens ersten Lumineszenzstoff des zweiten Wertdokuments als beispielsweise unsichtbare Beschichtung auf dem Wertdokument vorzusehen. Der erste und zweite Lumineszenzstoff des ersten Wertdokuments und/ oder der wenigstens erste Lumineszenzstoff des zweiten Wertdokuments können auch auf oder in einem beispielsweise aus Kunststoff bestehenden Trägermaterial vorgesehen sein, das in eine Papier- oder Kunststoffmasse zum Herstellen des Wertdokuments eingebettet ist. Das Trägermaterial kann beispielsweise in Form eines Sicherheits- oder Kennfadens, einer Melierfaser oder Planchette ausgebildet sein. Das Trägermaterial kann auch, beispielsweise in Form einer Plakette, an dem Wertdokument angebracht sein, beispielsweise um eine Produktsicherungsmaßnahme vorzunehmen. Grundsätzlich ist jede beliebige Formgebung des Trägermaterials möglich.

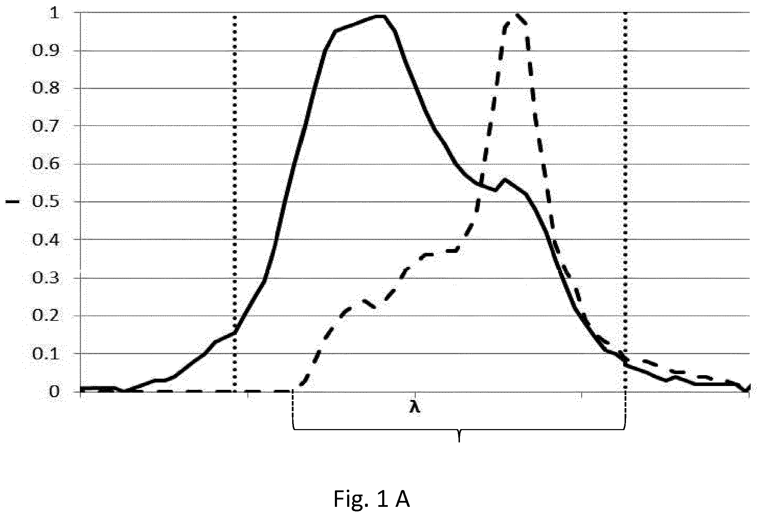

Der wenigstens erste und zweite Lumineszenzstoff des ersten Wertdokuments und der wenigstens erste Lumineszenzstoff des zweiten Wertdokuments weisen Einzelstoff-Emissionsspektren auf. Der erste und zweite Lumineszenzstoff des ersten Wertdokuments weisen unterschiedliche Einzelstoff-Emissionsspektren auf, die in einem Wellenlängenbereich überlappen (im Weiteren als Überlappbereich ÜB bezeichnet, vgl. Fig. 1A). Die beiden Emissionsspektren des ersten und zweiten Lumineszenzstoffs des ersten Wertdokuments überlappen dabei teilweise, jedoch nicht vollständig. Abhängig von seinem relativen Mengenanteil trägt der erste bzw. zweite Lumineszenzstoff des ersten Wertdokuments im Überlappbereich ÜB mit der Intensität seiner emittierten Lumineszenzstrahlung zur Gesamtintensität des Sicherheitsmerkmals bei. Der Begriff "Gesamtintensität" bezieht sich stets auf eine summarische Intensität, der durch einen (selben) Anregungspuls angeregten und zu einem selben Zeitpunkt bei einer bestimmten Wellenlänge oder in einem bestimmten Wellenlängenbereich erfassten Lumineszenzstrahlungen der in Kombination in dem Sicherheitsmerkmal enthaltenen Lumineszenzstoffe. In entsprechender Weise bezieht sich der Begriff "Gesamtabklingzeit" auf die Abklingzeit der Gesamtintensität, im Unterschied zu einer individuellen Abklingzeit der individuellen Intensität eines Lumineszenzstoffs.

Die Begriffe "integrierte Gesamtintensität" und "integrierte individuelle Intensität" beziehen sich auf das spektrale Integral der jeweiligen Intensität über einen angegebenen Bereich.

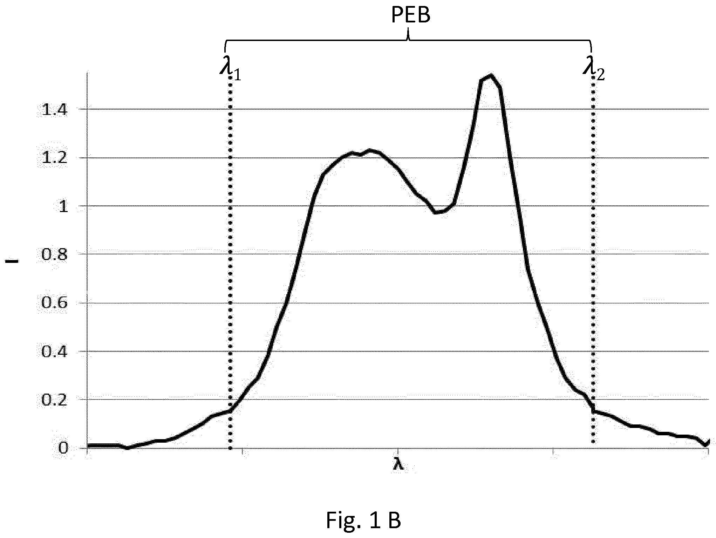

Bei einer Messung der Gesamtintensität mit einer typischen Auflösung von bevorzugt 20 nm ergibt sich ein ununterbrochener "primärer Emissionsbereich" PEB, der wie folgt definiert ist (siehe Figur 1B, Bereich zwischen den gepunkteten Markierungslinien):

- Das Maximum der Gesamtintensität befindet sich im primären Emissionsbereich.
- Der primäre Emissionsbereich ist der größte zusammenhängende Wellenlängenbereich, in dem die Gesamtintensität 10% des Maximums nicht unterschreitet.

Hintergrund dieser Definition ist, dass für ein effizientes, schnell auslesbares Sicherheitsmerkmal notwendigerweise die Hauptemission ausgewertet werden muss und nicht ausschließlich z.B. eine eventuell auch vorhandene schwächere Nebenemission. Weiterhin führt die Bestimmung der Abklingzeit in wenig intensiven Bereichen zu einer höheren Messungenauigkeit bzw. zu einem erhöhten Signal-zu-Rausch-Verhältnis, so dass für diese Teilbereiche bei einer schnellen Messung kein zuverlässiger Wert für die Abklingzeit ermittelt werden kann.

Der "Überlappungsgrad" von zwei Einzelstoff-Emissionsspektren von zwei voneinander verschiedenen Lumineszenzstoffen im primären Emissionsbereich ist wie folgt definiert:
Zunächst werden die Einzelstoff-Emissionsspektren I'(x) und J'(x), deren Kurven sich ergeben, wenn die individuellen Intensitäten I' bzw. J' gegen die Wellenlänge (x) aufgetragen werden, auf den gleichen Flächeninhalt normiert. D.h.

$$I(x) = I'(x) / \int_{\lambda 1}^{\lambda 2} I'(x) dx, \quad J(x) = J'(x) / \int_{\lambda 1}^{\lambda 2} J'(x) dx.$$

In diesem Fall wurde z.B. auf den Flächeninhalt 1 normiert. $\lambda 1$ ist die untere Grenzwellenlänge des primären Emissionsbereichs und $\lambda 2$ ist die obere Grenzwellenlänge des primären Emissionsbereichs.

Der Überlappungsgrad ist dann durch folgende Formel definiert:

$$\text{Überlappungsgrad} = \frac{2 \int_{\lambda 1}^{\lambda 2} I(x) \cdot J(x) dx}{\int_{\lambda 1}^{\lambda 2} I(x) dx + \int_{\lambda 1}^{\lambda 2} J(x) dx}$$

Er bezeichnet den relativen Anteil der spektralen Überlappung innerhalb des primären Emissionsbereiches zwischen den Einzelstoff-Emissionsspektren der jeweiligen Lumineszenzstoffe.

Der Überlappungsgrad der Emissionsspektren zweier Lumineszenzstoffe ist eine von der relativen Intensität und dem Mengenverhältnis der Lumineszenzstoffe unabhängige Kenngröße, die sich allein auf die formabhängige Überlappung der jeweiligen Einzelstoff-Emissionsspektren bezieht. Zur Bestimmung des Überlappungsgrades werden bei Raumtemperatur gemessene Emissionsspektren herangezogen, welche mit einer typischen Detektorauflösung von bevorzugt 20 nm gemessen wurden.

Erfindungsgemäß sind der erste und zweite Lumineszenzstoff des ersten Wertdokuments so ausgebildet, dass deren Einzelstoff-Emissionsspektren einen Überlappungsgrad von weniger als 80%, bevorzugt weniger als 65%, besonders bevorzugt weniger als 50%, sowie einen Überlappungsgrad von mehr als 5%, bevorzugt mehr als 10%, besonders bevorzugt mehr als 20%, aufweisen.

Wertdokumentsysteme, welche Sicherheitsmerkmale aus derartigen in ihrer Emission überlappenden Lumineszenzstoffen enthalten, können bei bestimmter Kombination von Lumineszenzstoffen besonders vorteilhafte Eigenschaften erhalten. Überraschenderweise wurde entdeckt, dass es möglich ist, durch spezifische Kombination des ersten Lumineszenzstoffs und zweiten Lumineszenzstoffs Systeme aus Stoffgemischen zu entwickeln, welche vorteilhafte Eigenschaften besitzen, insbesondere erzeugen die komplementären Emissionsspektren der ersten und zweiten Stoffklassen bei Kombination eine hohe Anzahl an gut trennbaren Kodierungen mit gleichzeitig hoher Fälschungssicherheit. Diese Kodierungen können auch mit Sensoren sicher unterschieden werden, die nicht mit einer Vielzahl von Spektralkanälen spektral hochauflösend arbeiten und daher eine geringere Komplexität aufweisen.

Für die erfindungsgemäßen Wertdokumentsysteme werden statt einer Vielzahl unterschiedlicher einzelner Lumineszenzstoffe mit jeweils unterschiedlichen Emissionsspektren Stoffmischungen aus in der Emission überlappenden Lumineszenzstoffen verwendet. Je nach Materialwahl des ersten und zweiten Lumineszenzstoffs und deren Mengenverhältnis kann so eine Vielzahl an Emissionsspektren erzeugt werden, welche z. B. analog zu denen von jeweils unterschiedlichen Einzelstoffen sind, oder auch unterschiedlich zu denen von Einzelstoffen sind und weitere Eigenschaften besitzen.

Mit den wenigstens zwei unterschiedlichen Lumineszenzstoffen, nämlich dem ersten und dem zweiten Lumineszenzstoff des ersten Wertdokuments, ist es im Hinblick auf unterschiedliche Mischungsverhältnisse im Sicherheitsmerkmal möglich, eine Vielzahl an Sicherheitsmerkmalen herzustellen. Es ist damit möglich, Skaleneffekte bei der Herstellung besser zu nutzen, da der erste und zweite Lumineszenzstoff des ersten Wertdokuments, welche hier in allen Mischungen enthalten sein können, insgesamt in deutlich größeren Mengen benötigt werden, als wenn entsprechende Kodierungen mit einer Vielzahl von einzelnen Lumineszenzstoffen gebildet würden.

Ein weiterer Vorteil ergibt sich daraus, dass Stoffe mit einem spezifischen Emissionsspektrum oft nur durch Wahl von exotischen Matrizen zugänglich sind. Mit "exotisch" sind hier z.B. Matrizen mit unüblichen Strukturen gemeint, deren Existenz akademisch bewiesen wurde, welche sich jedoch nur umständlich herstellen lassen und daher für den kommerziellen Einsatz ungeeignet sind. Beispielsweise benötigt die Herstellung derartiger Matrizen unübliche Reaktionsbedingungen, kostspielige Edukte oder zahlreiche Syntheseschritte. Und obwohl derartige Stoffe unübliche und einzigartige Emissionsspektren besitzen können, sind andere ihrer Eigenschaften, wie z.B. eine geringe chemische Stabilität gegen Säuren oder Basen, oft nicht für den Einsatz als Sicherheitsmerkmal geeignet.

Wird das Emissionsspektrum des Sicherheitsmerkmals des ersten Wertdokuments erfindungsgemäß aus den Einzelstoff-Emissionsspektren des ersten und zweiten Lumineszenzstoffs zusammengesetzt, können gezielt Stoffe mit besonders vorteilhaften Eigenschaften eingesetzt werden: Diese umfassen unter anderem eine hohe chemische Beständigkeit, eine hohe Lumineszenzeffizienz, eine einfache Synthese und kostengünstige Rohstoffe. Ebenso können neue Emissionsspektren erzeugt werden, die keinem bekannten Einzelstoff entsprechen. Insbesondere können Emissionsspektren gezielt angepasst werden um z. B. eine möglichst gute Trennbarkeit unterschiedlicher Kodierungen zu erreichen.

Ein dritter Vorteil ergibt sich durch Kombination der Eigenschaften der in der Emission überlappenden Stoffe, was in Emissionsspektren mit neuartigen zeitlichen Eigenschaften resultiert, welche nicht über Einzelstoffe zugänglich sind. Hierzu zählen beispielsweise Mischungen aus Stoffen mit unterschiedlichen Abklingzeiten, in welchen sich das detektierte Emissionsspektrum über die Zeit in einer definierten Art und Weise ändert.

Eine Ausgestaltung kann vorsehen, dass mindestens zwei, bevorzugt mindestens drei Sicherheitsmerkmale des Wertdokumentsystems so gestaltet sind, dass sie direkt nach der Anregung jeweils unterschiedliche Emissionsspektren zeigen, zu jeweils unterschiedlichen Zeiten nach der Anregung jedoch das gleiche Emissionsspektrum zeigen. Dies wird durch eine geeignete Kombination des ersten und zweiten Lumineszenzsstoffs des Sicherheitsmerkmals mit jeweils unterschiedlichen Abklingzeiten in den Spektralbereichen A bzw. B erreicht. In diesem Fall können die einzelnen Sicherheitsmerkmale unterschieden werden, indem nach der Anregung die jeweilige Zeit bestimmt wird, bis ein vorgegebenes Zielspektrum erreicht wird.

Die Vorteile der Erfindung offenbaren sich speziell bei der maschinellen Vermessung von Wertdokumenten in Hochgeschwindigkeitssensoren und den dafür geeigneten Verfahren, im Gegensatz zu Verfahren, welche z. B. bei einer forensischen Vermessung einer einzelnen Banknote in einem Labor verwendet werden. Hier bewegen sich die Banknoten typischerweise mit bis zu 12 Meter pro Sekunde durch die Maschine, so dass spezielle Anforderungen an die Detektionsmethoden und Stoffeigenschaften gestellt werden müssen. Weiterhin ist es mit erfindungsgemäßen Sicherheitsmerkmalen möglich, die einzelnen Kodierungen des Wertdokumentsystems mit einem einfachen Sensor, welcher z. B. den primären Emissionsbereich mit nur zwei oder nur drei Detektionskanälen abdeckt, zu unterscheiden.

In einer Ausgestaltung umfasst das Sicherheitsmerkmal des zweiten Wertdokuments einen zweiten Lumineszenzstoff, wobei der erste Lumineszenzstoff des zweiten Wertdokuments der ersten Stoffklasse angehört und der zweite Lumineszenzstoff des zweiten Wertdokuments der zweiten Stoffklasse angehört. Der erste Lumineszenzstoff und der zweite Lumineszenzstoff des zweiten Wertdokuments weisen teilweise überlappende Emissionsspektren auf. Zudem sind der erste und zweite Lumineszenzstoff des Sicherheitsmerkmals des zweiten Wertdokuments derart ausgebildet, dass deren primärer Emissionsbereich der teilweise überlappenden Emissionsspektren in mindestens zwei unterschiedliche, unmittelbar benachbarte Spektralbereiche A, B aufteilbar ist, wobei die wenigstens zwei benachbarten Spektralbereiche größer als 50 nm und kleiner als 250 nm sind, wobei wenigstens einer der wenigstens zwei benachbarten Spektralbereiche zumindest einen Teil der Emission des ersten und zweiten Lumineszenzstoffs des Sicherheitsmerkmals des zweiten Wertdokuments umfasst (d.h. der prozentuale Anteil des Integrals über den Emissionsbereich, der innerhalb des spektralen Empfindlichkeitsbereichs der betreffenden Detektionskanäle liegt, ist größer Null), und wobei die Spektralbereiche A, B des Sicherheitsmerkmals des zweiten Wertdokuments identisch mit denen des Sicherheitsmerkmals des ersten Wertdokuments sind.

In dieser Ausgestaltung bestehen also sowohl das Sicherheitsmerkmal des ersten als auch das des zweiten Wertdokuments aus Stoffmischungen aus Stoffen der ersten und zweiten Stoffklasse mit teilweise überlappenden Emissionsspektren. Hierdurch wird unter anderem die Fälschungssicherheit weiter erhöht, und das Sicherheitsmerkmal des zweiten Wertdokuments erhält ebenfalls die bereits beschriebenen Vorteile derartiger Stoffmischungen gegenüber dem Einsatz von Einzelstoffen: Beispielsweise können neue Emissionsspektren erzeugt werden, die keinem bekannten Einzelstoff entsprechen. Ein weiterer Vorteil ergibt sich durch Kombination der Eigenschaften der in der Emission überlappenden Stoffe, was in Emissionsspektren mit neuartigen zeitlichen Eigenschaften resultiert, die nicht über Einzelstoffe zugänglich sind.

In einer bevorzugten Ausführungsform weisen mindestens zwei, bevorzugt mindestens drei, besonders bevorzugt mindestens vier Wertdokumente des Wertdokumentsystems ein Sicherheitsmerkmal auf, welches aus einer Stoffmischung von Lumineszenzstoffen der ersten Stoffklasse und der zweiten Stoffklasse mit teilweise überlappenden Emissionsspektren besteht.

Analog zum Sicherheitsmerkmal des ersten Wertdokuments mit erstem und zweitem Lumineszenzstoff ist dann das Intensitätsverhältnis U der Emission des Sicherheitsmerkmals des mindestens zweiten Wertdokuments der Quotient aus der Gesamtintensität des ersten und zweiten Lumineszenzstoffs des Sicherheitsmerkmals des zweiten Wertdokuments in den Spektralbereichen A, B. Das Abklingzeitverhältnis V des Sicherheitsmerkmals des zweiten Wertdokuments ist der Quotient aus den Gesamtabklingzeiten $\tau_A$ bzw. $\tau_B$ in den Spektralbereichen A bzw. B des Sicherheitsmerkmals des zweiten Wertdokuments, und die Abklingzeitsumme S des Sicherheitsmerkmals des zweiten Wertdokuments ist die Summe der Gesamtabklingzeiten $\tau_A$ und $\tau_B$ in den Spektralbereichen A, B des Sicherheitsmerkmals des zweiten Wertdokuments.

Zur Unterscheidung unterschiedlicher Sicherheitsmerkmale von unterschiedlichen Wertdokumenten des Wertdokumentsystems werden bevorzugt stets die gleichen Spektralbereiche A, B herangezogen.

In einer Ausgestaltung weisen jeweils der erste und zweite Lumineszenzstoff des Sicherheitsmerkmals des ersten Wertdokuments die gleiche Abklingzeit wie der erste und zweite Lumineszenzstoff des Sicherheitsmerkmals des zweiten Wertdokuments auf, insbesondere weisen alle Lumineszenzstoffe mit überlappender Emission in den zwei Spektralbereichen A und B jeweils die gleiche Abklingzeit auf. Die Lumineszenzstoffe mit überlappender Emission werden also so gewählt, dass ihre Abklingzeiten im Wesentlichen gleich sind, das heißt, ihre Abklingzeiten unterscheiden sich um weniger als 10%, bevorzugt um weniger als 5% voneinander (bezogen auf die kürzeste individuelle Abklingzeit der Lumineszenzstoffe).

In diesem Fall wirkt das aus den verschiedenen Lumineszenzstoffen zusammengesetzte Emissionsspektrum wie das Spektrum eines neuen Einzelstoffs. Vorteilhaft bei dieser Variante ist unter anderem, dass man bei der Produktion von Sicherheitsmerkmalen die spektralen Eigenschaften anpassen kann, ohne dass die Abklingzeit bzw. das Verhältnis der Abklingzeiten in den unterschiedlichen Spektralbereichen beeinflusst wird. Dies erlaubt es unter anderem, Fertigungsschwankungen auszugleichen oder die spektralen Eigenschaften des Sicherheitsmerkmals an Absorptionsbanden des Substrats o.ä. anzugleichen.

Weiterhin suggeriert das gemessene Emissionsspektrum eines Wertdokuments einem potentiellen Fälscher eine andere Stoffklasse, zu welcher dann jedoch weitere Stoffeigenschaften nicht passen würden. Hierdurch wird die Fälschungssicherheit erhöht.

Bevorzugt beträgt die Abklingzeit der einzelnen Lumineszenzstoffe der Sicherheitsmerkmale des ersten und zweiten Wertdokuments wenigstens 0,05 ms. Besonders bevorzugt liegt die Abklingzeit in einem Bereich von 0,05 bis 5 ms. Innerhalb von diesem Bereich wird eine gute maschinelle Detektierbarkeit der Abklingzeit in Banknotenbearbeitungsmaschinen gewährleistet. Die Messung kürzerer Abklingzeiten ist technisch aufwändig, und die Bestimmung von längeren Abklingzeiten ist aufgrund der hohen Geschwindigkeit der Banknoten in Banknotenbearbeitungsmaschinen von bis zu 12 Metern pro Sekunde nicht möglich.

Eine weitere Ausgestaltung kann vorsehen, dass sich der erste und zweite Lumineszenzstoff des ersten Wertdokuments und ggf. des zweiten Wertdokuments in der Abklingzeit um 10% bis 50% unterscheiden (bezogen auf die kürzeste individuelle Abklingzeit der Lumineszenzstoffe). In diesem Fall wirkt das aus den verschiedenen Lumineszenzstoffen zusammengesetzte Spektrum auf den ersten Blick bzw. bei oberflächlicher Analyse wie das eines Einzelstoffs. Der geringe Unterschied kann jedoch benutzt werden, um das Sicherheitsmerkmal bei genauer Analyse von einem Einzelstoff mit dem gleichen Emissionsspektrum zu unterscheiden. Hierdurch wird u.a. ein höherer Schutz gegen Fälschungen erzielt.

Eine weitere Ausgestaltung kann vorsehen, dass sich der erste und zweite Lumineszenzstoff des ersten Wertdokuments sowie der wenigstens eine Lumineszenzstoff des zweiten Wertdokuments in der Abklingzeit um wenigstens 50%, vorzugsweise um 75% und besonders bevorzugt um mehr als 100%, unterscheiden (bezogen auf die kürzeste individuelle Abklingzeit der Lumineszenzstoffe). Für ein Sicherheitsmerkmal besitzen somit alle Lumineszenzstoffe mit überlappender Emission in den zwei Spektralbereichen A und B ein stark unterschiedliches Abklingverhalten, bzw. eine stark unterschiedliche Abklingzeit.

In diesem Fall wird ein besonders starker Schutz gegen Nachahmung erzeugt, da das Abklingverhalten in den unterschiedlichen Detektorkanälen eines Sensors stark von den gewählten Messparametern abhängt (Größe des Detektionskanals etc.), welche einem potentiellen Nachahmer bekannt sein müssen, um ein entsprechendes Sicherheitsmerkmal zu fälschen. Als weiterer Vorteil können hier besondere Kodierungen eines Wertdokumentsystems erzeugt werden, welche das gleiche Emissionsspektrum aufweisen, sich jedoch untereinander im Abklingzeitverhältnis in den Spektralbereichen A und B bzw. in unterschiedlichen Detektionskanälen eines Sensors unterscheiden. Beispielsweise können bei Verwendung von zwei Detektionskanälen, Kanal 1 und Kanal 2, welche ein Emissionsspektrum mit der jeweils gleichen Intensität messen folgende Fälle auftreten:

a) Kanal 1 detektiert eine höhere Abklingzeit als Kanal 2
b) Kanal 1 und Kanal 2 detektieren die gleiche Abklingzeit
c) Kanal 1 detektiert eine niedrigere Abklingzeit als Kanal 2

Somit können Wertdokumente durch den Sensor über das Abklingzeitverhältnis in drei oder mehr Klassen, z.B. drei unterschiedliche Währungen, aufgeteilt werden, obwohl sie das exakt gleiche Emissionsspektrum zeigen.

Weiterhin sind komplexere Formen der Überlappung bzw. des Spektralverlaufs möglich. Beispielsweise kann ein Lumineszenzstoff nicht nur, wie schematisch dargestellt, aus einer symmetrisch aufgebauten Emissionsbande bestehen, sondern im untersuchten Bereich eine asymmetrische Bande, eine Hauptbande mit einer Schulter oder mehrere Banden, wie z.B. eine Hauptbande und mehrere Nebenbanden, aufweisen. Weiterhin können die einzelnen Lumineszenzstoffe selbst Besonderheiten im zeitlichen Verhalten zeigen, z.B. ein messbares Anklingverhalten mit dazugehöriger Anklingzeit oder einen atypischen Verlauf der Abklingkurve. Hierdurch sind wesentlich komplexere Zusammenhänge zwischen dem beobachteten Spektralbereich und der detektierten Abklingzeit mit lokalen Minima, lokalen Maxima bzw. einem oder mehreren Wendepunkten möglich.

Für eine Nachahmung des mit der Wellenlänge kontinuierlich variierenden Verlaufs der Gesamtabklingzeit derartiger Lumineszenzstoff-Mischungen ist eine spezifische Kombination aus Lumineszenzstoffen notwendig, da die einzelnen Komponenten nicht nur in Summe das Zielspektrum ergeben müssen, sondern auch über passende Bereiche spektraler Überlappung und passende Abklingzeitverhältnisse verfügen müssen. Hierdurch wird eine Nachahmung erheblich erschwert.

Erfindungsgemäß kann durch eine Kombination von mindestens zwei Lumineszenzstoffen mit einem definierten Überlappungsgrad und mit spezifischen unterschiedlichen Abklingzeiten ein effektiver Schutz gegen Nachahmung erreicht werden. Eine Nachahmung durch Kombination unterschiedlicher Lumineszenzstoffe mit anderen spektralen Eigenschaften ist hier nur noch möglich, wenn die genauen Messparameter, insbesondere die spektrale Lage und Form der Filterkurven der Detektionskanäle, die zeitliche Abtastung bzw. der zeitliche Verlauf der Lumineszenz, sowie der Algorithmus bzw. die gewählten Messparameter zur Bestimmung der effektiven Abklingzeit bekannt sind.

Durch einen Überlappungsgrad der Einzelstoff-Emissionsspektren der Lumineszenzstoffe von weniger als 80% und mehr als 5% kann sichergestellt werden, dass genügend Varianz im Abklingzeitverhalten der Gesamtintensität der Lumineszenzstoffe auftritt und einerseits das Vorliegen einer einzelnen, über den gesamten Bereich konstanten Mischabklingzeit (entsprechend einem Überlappungsgrad von 100%, d.h. identische Spektralform beider Emissionen) sowie andererseits das Vorliegen einzelner, separater Emissionen mit jeweils konstanten Abklingzeiten (entsprechend einem Überlappungsgrad von 0%) in vorteilhafter Weise vermieden wird.

Bevorzugt liegen die Einzelstoff-Emissionsspektren der Lumineszenzstoffe und somit der primäre Emissionsbereich in einem engen Spektralbereich, d.h. z.B. einem Spektralbereich von weniger als 300 nm. Bei einer vorteilhaften Ausgestaltung des erfindungsgemäßen Wertdokuments sind die Lumineszenzstoffe zu diesem Zweck so ausgebildet, dass unmittelbar bzw. direkt benachbarte Intensitätsmaxima voneinander verschiedener Einzelstoff-Emissionsspektren sich um weniger als 200 nm, vorzugsweise um weniger als 100 nm, voneinander unterscheiden. Vorzugsweise sind die unmittelbar bzw. direkt benachbarten Intensitätsmaxima voneinander verschiedener Einzelstoff-Emissionsspektren um mehr als 20 nm, besonders bevorzugt um mehr als 50 nm, voneinander entfernt, um einen für das erste oder zweite Sicherheitsmerkmal hinreichend großen Überlappbereich zu erhalten. Bei einer besonders vorteilhaften Ausgestaltung der Erfindung haben die unmittelbar bzw. direkt benachbarten Intensitätsmaxima voneinander verschiedener Lumineszenzstoffe jeweils einen Abstand von weniger als 100 nm und mehr als 50 nm.

Vorzugsweise liegt der primäre Emissionsbereich der Lumineszenzstoffe im Infrarot-Bereich, d.h. zwischen 700 nm und 2000 nm, besonders bevorzugt zwischen 800 nm und 2000 nm.

Die Lumineszenzstoffe können im Infrarotbereich angeregt werden, d.h. zwischen 700 nm und 2000 nm, bevorzugt zwischen 800 und 1500 nm.

Des Weiteren können die Lumineszenzstoffe im sichtbaren Spektralbereich angeregt werden, d.h. zwischen 400 nm und 700 nm. Dabei ist eine Anregung im Infrarotbereich besonders bevorzugt.

Vorzugsweise handelt es sich bei den Emissionszentren der Lumineszenzstoffe um Seltenerdionen, nämlich um die Seltenerdionen Neodym (Nd), Ytterbium (Yb), Erbium (Er), Thulium (Tm), und/oder Holmium (Ho).

In einer Ausgestaltung der Erfindung liegt der primäre Emissionsbereich der Lumineszenzstoffe im Bereich von 750 nm bis 1100 nm, insbesondere im Bereich von 800 nm bis 1100 nm. In einer bevorzugten Ausgestaltung der Erfindung liegt der primäre Emissionsbereich im Bereich von 900 nm bis 1100 nm. In diesen Bereichen können z.B. Lumineszenzstoffe mit Neodym und/oder Ytterbium vorteilhaft eingesetzt werden.

In einer weiteren Ausgestaltung der Erfindung liegt der primäre Emissionsbereich im Bereich von 1500 nm bis 1900 nm, bevorzugt im Bereich von 1500 nm bis 1700 nm. In diesen Bereichen können z.B. Lumineszenzstoffe mit Erbium und/oder Thulium vorteilhaft eingesetzt werden. Alternativ kann der primäre Emissionsbereich im Bereich von 1700 nm bis 1900 nm liegen. In diesen Bereichen können z.B. Lumineszenzstoffe mit Thulium und/ oder Holmium vorteilhaft eingesetzt werden.

In einer Ausgestaltung besitzen die Lumineszenzstoffe für ein Wertdokumentsystem gemäß der Erfindung mit überlappender Emission jeweils das gleiche Seltenerdion als Emissionszentrum. Bevorzugt besitzen die Lumineszenzstoffe mit überlappender Emission nur ein einzelnes Seltenerdion aus der Gruppe {Nd, Yb, Er, Tm, Ho}. Beispielsweise enthält einer, beispielsweise der erste der Lumineszenzstoffe, nur Erbium und keines der anderen aus der Gruppe und ein weiterer Lumineszenzstoff, beispielsweise der zweite Lumineszenzstoff, ebenfalls nur Erbium und keines der anderen aus der Gruppe. Hierdurch wird u.a. sichergestellt, dass zwei unterschiedliche, separate Wertdokumentsysteme nicht ganz oder partiell die gleichen Seltenerdionen enthalten und somit miteinander wechselwirken und sich gegenseitig stören. Weiterhin wird verhindert, dass über eine separate Anregung der weiteren Seltenerdionen die einzelnen Komponenten der Stoffmischung separat analysiert werden können.

In einer bevorzugten Ausführungsform besitzen die Lumineszenzstoffe mit überlappender Emission Nd als Dotierstoff und enthalten keines der Seltenerden Yb, Er, Tm oder Ho als Dotierstoff.

In einer weiteren bevorzugten Ausführungsform besitzen die Lumineszenzstoffe mit überlappender Emission Yb als Dotierstoff und enthalten keines der Seltenerden Nd, Er, Tm oder Ho als Dotierstoff.

In einer weiteren bevorzugten Ausführungsform besitzen die Lumineszenzstoffe mit überlappender Emission Er als Dotierstoff und enthalten keines der Seltenerden Nd, Yb, Tm oder Ho als Dotierstoff.

Bei Verwendung dieser Elemente ist aufgrund des Wellenlängenbereichs der Emission eine besonders gute Nachweisbarkeit durch einen einfach aufgebauten Detektor gegeben.

Die Bezeichnung "als Dotierstoff" meint dabei den üblichen Einsatz derartiger Elemente in der Herstellung von Lumineszenzstoffen, wobei typischerweise 0.1% bis 50% der besetzbaren Positionen der Matrix mit dem Dotierstoff besetzt sind. Nicht gemeint sind geringe Verunreinigungen mit den entsprechenden Elementen, welche z.B. abhängig von der gewählten Reinheit der Edukte bei der Herstellung des Lumineszenzstoffs mit eingebracht werden können.

In einer Ausgestaltung besitzen die Lumineszenzstoffe für ein erfindungsgemäßes Wertdokumentsystem mit überlappender Emission jeweils unterschiedliche Seltenerdionen als Emissionszentrum oder besitzen Mischungen aus den Seltenerdionen der Gruppe {Nd, Yb, Er, Tm, Ho}. Hierdurch können komplexere Effekte, z.B. Energieübertragungssysteme oder gezielte Abwandlung des Spektralverhaltens, genutzt werden.

**In** einer bevorzugten Ausführungsform besitzen die Lumineszenzstoffe mit überlappender Emission Nd und/oder Yb und/oder Er als Dotierstoff und enthalten keines der Seltenerden Tm oder Ho als Dotierstoff.

**In** einer bevorzugten Ausführungsform besitzen die Lumineszenzstoffe mit überlappender Emission Nd und/oder Yb als Dotierstoff und enthalten keines der Seltenerden Er, Tm oder Ho als Dotierstoff.

Bei Verwendung dieser Elemente ist eine besonders gute Nachweisbarkeit durch einen einfach aufgebauten Detektor gegeben.

Vorzugsweise findet die Emission der Lumineszenzstoffe im Wesentlichen im primären Emissionsbereich statt. Dies bedeutet, dass neben den teilweise überlappenden Emissionsbanden keine weiteren Emissionsbanden in anderen Spektralbereichen auftreten. Hierdurch wird in vorteilhafter Weise vermieden, dass weitere nichtüberlappende, isoliert auftretende Emissionsbanden im Rahmen einer Nachahmung separat ausgewertet werden können, um Rückschlüsse über die Emissionsbanden des primären Emissionsbereichs zu erlangen. **In** einer bevorzugten Ausgestaltung der Erfindung sind die Lumineszenzstoffe zu diesem Zweck so ausgebildet, dass mindestens 80%, insbesondere mindestens 90%, der individuellen Intensitäten im primären Emissionsbereich emittiert werden.

**In** einem besonders bevorzugten Ausführungsfall werden die unterschiedlichen Kodierungen des Wertdokumentsystems durch Kombination von möglichst wenigen und möglichst ähnlichen Lumineszenzstoffen generiert, wie im Folgenden ausgeführt wird. Hierdurch ist ein besonders hoher Schutz gegen Analyse und Nachahmung des Sicherheitsmerkmals gegeben.

Bevorzugt weisen der erste und/oder zweite Lumineszenzstoff des Sicherheitsmerkmals des ersten Wertdokuments die gleiche Matrix auf wie der erste Lumineszenzstoff und/oder der gegebenenfalls zweite Lumineszenzstoff des Sicherheitsmerkmals des zweiten Wertdokuments.

Bevorzugt umfasst das Wertdokumentsystem mindestens ein drittes Wertdokument, dessen Sicherheitsmerkmal mindestens einen Lumineszenzstoff aufweist, welcher die gleiche Matrix wie der erste oder zweite Lumineszenzstoff des Sicherheitsmerkmals des ersten Wertdokuments aufweist, sich jedoch in seiner Dotierung und/oder seinem Abklingverhalten unterscheidet.

Bevorzugt bestehen mindestens 3, besonders bevorzugt mindestens 4, weiter bevorzugt mindestens 5 unterschiedliche Kodierungen des Wertdokumentsystems aus Sicherheitsmerkmalen mit folgenden Eigenschaften:
die Sicherheitsmerkmale bestehen ausschließlich aus Stoffmischungen mit einer ersten Matrix und einer zweiten Matrix, wobei die erste und/oder zweite Matrix eine unterschiedliche Dotierung und/oder ein unterschiedliches Abklingverhalten aufweisen können.

Beispielsweise kann es sich bei der ersten Matrix um einen Lutetium-Aluminium-Granat (LuAG) handeln und bei der zweiten Matrix um ein Yttriumvanadat ($YVO_4$), welche beispielsweise mit unterschiedlichen Mengen Neodym dotiert werden, um ein schnelles Abklingzeitverhalten (S) oder ein langsames Abklingzeitverhalten (L) zu erzeugen. Für die unterschiedlichen Kodierungen des Wertdokumentsystems werden dann beispielsweise folgende Sicherheitsmerkmale erstellt:

- 4 Sicherheitsmerkmale aus unterschiedlichen Mischungsverhältnissen LuAG:Nd (S) und $YVO_4$:Nd (S)
- 4 Sicherheitsmerkmale aus unterschiedlichen Mischungsverhältnissen LuAG:Nd (S) und $YVO_4$:Nd (L)
- 4 Sicherheitsmerkmale aus unterschiedlichen Mischungsverhältnissen LuAG:Nd (L) und $YVO_4$:Nd (S)
- 4 Sicherheitsmerkmale aus unterschiedlichen Mischungsverhältnissen LuAG:Nd (L) und $YVO_4$:Nd (L)

Somit kann ein Wertdokumentsystem mit 16 Kodierungen erstellt werden, welche jedoch untereinander sehr ähnlich und daher für einen Fälscher nur schwer zu analysieren und nachzuahmen sind.

In einer bevorzugten Ausgestaltung unterscheiden sich unterschiedliche Kodierungen des Wertdokumentsystems in mindestens einem ihrer U-, V- oder S-Werte um mindestens 20%, bevorzugt mindestens 50% voneinander, bezogen auf den kleineren Wert. Hierdurch wird sichergestellt, dass eine gute Unterscheidung der einzelnen Kodierungen möglich ist.

In einer weiteren bevorzugten Ausgestaltung unterscheiden sich unterschiedliche Kodierungen des Wertdokumentsystems in ihren V-Werten um mindestens 20%, bevorzugt mindestens 50%, voneinander.

In einer weiteren bevorzugten Ausgestaltung unterscheiden sich unterschiedliche Kodierungen des Wertdokumentsystems in ihren U-Werten um mindestens 20%, bevorzugt mindestens 50%, voneinander.

In einer weiteren bevorzugten Ausgestaltung unterscheiden sich unterschiedliche Kodierungen des Wertdokumentsystems in mindestens zwei ihrer U-, V- und S-Werte um mindestens 20%, bevorzugt mindestens 50%, voneinander.

Hierdurch wird sichergestellt, dass eine Trennung von Kodierungen nicht ausschließlich über S-Werte erfolgt, da hier ein geringerer Fälschungsschutz gegeben ist, als wenn sich stattdessen oder zusätzlich die U- oder V-Werte zwischen Kodierungen unterscheiden.

Bei einer weiteren Ausgestaltung des erfindungsgemäßen Wertdokumentsystems sind die Lumineszenzstoffe so ausgebildet, dass die individuellen Abklingzeiten der Lumineszenzstoffe im Bereich von 50 $\mu$s bis 5000 $\mu$s, vorzugsweise im Bereich von 100 $\mu$s bis 1000 $\mu$s, liegen. Vorzugsweise liegt die individuelle Abklingzeit eines ersten Lumineszenzstoffs im Bereich von 100 $\mu$s bis 200 $\mu$s und die individuelle Abklingzeit eines zweiten Lumineszenzstoffs im Bereich von 400 $\mu$s bis 1000 $\mu$s, wodurch ein besonders guter Schutz gegen Nachahmung des Sicherheitsmerkmals erreicht werden kann.

Insbesondere sind Lumineszenzstoffe mit Abklingzeiten über 5 Millisekunden erfindungsgemäß bei maschineller Auswertung auf Hochgeschwindigkeits-Banknotensensoren nicht einsetzbar, da hier die Banknote mit Geschwindigkeiten von bis zu 12 Meter pro Sekunde transportiert wird. Eine Detektion bzw. Trennung solcher langen Abklingzeiten kann nicht durchgeführt werden, da die Banknote sich aus dem Messfeld bewegt, bevor die Lumineszenzintensität aufgrund der Abklingzeit merklich gefallen ist. Weiterhin ist die Messung sehr kurzer Abklingzeiten technisch aufwändig.

Bevorzugt besitzt keiner der Lumineszenzstoffe eine Abklingzeit von mehr als 5000 $\mu$s, besonders bevorzugt von mehr als 2000 $\mu$s, insbesondere bevorzugt von mehr als 1000 $\mu$s. Dies erlaubt eine präzisere Messung der Abklingzeit auch bei hohen Transportgeschwindigkeiten. Bevorzugt besitzt keiner der Lumineszenzstoffe eine Abklingzeit von weniger als 50 $\mu$s, besonders bevorzugt von weniger als 80 $\mu$s, insbesondere bevorzugt von weniger als 100 $\mu$s. Bei geringeren Abklingzeiten wird eine Unterscheidung von Hintergrund-Fluoreszenzen z.B. von organischen Verunreinigungen zunehmend schwieriger. Erfindungsgemäß werden anorganische Lumineszenzstoffe verwendet. Erfindungsgemäß besonders bevorzugt sind Lumineszenzstoffe, die jeweils ein anorganisches Wirtsgitter als Matrix verwenden, das mit mindestens einem Dotierstoff, gewählt aus den Seltenerdmetallen (bzw. deren Ionen), dotiert ist.

Das Einstellen von Abklingzeiten von anorganischen Lumineszenzstoffen ist im Stand der Technik bekannt. Beispielsweise kann ein Einstellen über die Menge an Dotierstoff (Konzentrationsquenching) erfolgen. Alternativ können Kodotierungen (Quencher) eingesetzt werden, wobei dafür typischerweise bestimmte Seltenerden wie Samarium, Praseodym oder Dysprosium eingesetzt werden oder bestimmte Übergangsmetalle, wie z.B. Eisen(III)-Ionen, aber auch zahlreiche andere Elemente. Alternativ kann die Abklingzeit über die Korngröße der Lumineszenzstoffe beeinflusst werden, insbesondere im Nanopartikel-Bereich, bzw. durch Strukturdefekte / Fehlstellen oder Oberflächendefekte beeinflusst werden, und kann somit über geeignete Synthesebedingungen oder Verarbeitung der Lumineszenzstoffe gesteuert werden. Bevorzugt erfolgt das Einstellen von Abklingzeiten im Rahmen dieser Erfindung über Konzentrationsquenching oder den Zusatz von Quenchern.

Bei einer Ausgestaltung der Erfindung sind die Lumineszenzstoffe des Wertdokumentsystems, d. h. der wenigstens erste und zweite Lumineszenzstoff des Sicherheitsmerkmals des ersten Wertdokuments und der wenigstens erste Lumineszenzstoff des zweiten Wertdokuments, so ausgebildet, dass sie, insbesondere der erste und zweite Lumineszenzstoff des ersten Wertdokuments, gemeinsam durch die gleiche Wellenlänge anregbar sind, was insbesondere eine gezielte und relativ starke Anregung der Lumineszenzstoffe durch einen spektral vergleichsweise schmalbandigen Anregungspuls (Lichtblitz, z. B. Laser) ermöglicht. Hierbei ist es vorteilhaft, wenn die Wellenlänge einem gemeinsamen Absorptionsmaximum in den Anregungsspektren der Lumineszenzstoffe entspricht oder bei voneinander verschiedenen Absorptionsmaxima mindestens 50% des jeweiligen Absorptionsmaximums anregen kann. Die Anregung erfolgt dabei bevorzugt in eine starke Anregungsbande eines Seltenerdions, welches in beiden Lumineszenzstoffen enthalten ist. Hierdurch ist eine effiziente gemeinsame Anregung der Lumineszenzstoffe möglich. Bevorzugt handelt es sich bei dieser Anregungsbande gleichzeitig um das Absorptionsmaximum der jeweiligen Anregungsspektren bzw. um eine Absorptionsbande, die mindestens 50% des Absorptionsmaximums des Anregungsspektrums erreicht.

Das Sicherheitsmerkmal des zweiten Wertdokuments kann als Einzelstoff, d.h. als ein einzelner Lumineszenzstoff, oder als Stoffmischung aus unterschiedlichen Lumineszenzstoffen vorliegen.

In einer Ausgestaltung handelt es sich bei den Einzelstoffen und den Stoffmischungen der Sicherheitsmerkmale um homogen durchmischte Pulver.

Diese Pulver liegen vorzugsweise im Substrat des Wertdokumentes vor, d.h. sie werden im Falle von Papiersubstraten der Papiermasse hinzugefügt oder bei der Herstellung von Polymersubstraten mit in das Polymer oder eine Polymerschicht des Polymersubstrats eingebracht. Alternativ werden die Stoffmischungen der Sicherheitsmerkmale einer Druckfarbe oder Lackierung zugegeben und dann mit dieser auf das Substrat aufgebracht.

In einer weiteren Ausgestaltung liegen die einzelnen Komponenten der Stoffmischungen des Sicherheitsmerkmals des ersten und/ oder zweiten Wertdokuments getrennt vor, d.h. eine erste Komponente der Stoffmischung bzw. ein erster Lumineszenzstoff ist in einem ersten Teilbereich des ersten und/ oder gegebenenfalls zweiten Wertdokuments, z.B. in der Papiermasse, vorhanden, und eine zweite Komponente der Stoffmischung bzw. ein zweiter Lumineszenzstoff ist in einem zweiten Teilbereich des ersten und/ oder gegebenenfalls zweiten Wertdokuments, z.B. in einer Druckschicht über der Papiermasse, vorhanden. Die unterschiedlichen Teilbereiche müssen dabei räumlich zumindest teilweise im Auflicht und/ oder Durchlicht überlappend sein, so dass beide Komponenten gleichzeitig gemessen werden können. Ein derartiges Sicherheitsmerkmal mit separat eingebrachten Lumineszenzstoffen zeigt bei Messung der räumlich überlappenden Bereiche ein analoges Emissionsspektrum wie eine homogene Mischung.

Das Sicherheitsmerkmal des erfindungsgemäßen Wertdokumentsystems kann somit beispielsweise als Pigment, Melierfaser oder Dotierung in das Substrat des ersten und/ oder zweiten Wertdokuments eingebracht sein. Weiterhin kann das Sicherheitsmerkmal als Druckfarbe oder Lackierung auf dem ersten und/ oder zweiten Wertdokument aufgebracht sein. Weiterhin kann das Sicherheitsmerkmal auf ein Trägermaterial in Form eines Sicherheitsstreifens, eines Kennfadens, einer Melierfaser, einer Planchette und/ oder eines Patches angeordnet sein. Weiterhin ist auch eine Kombination der aufgeführten Möglichkeiten denkbar.

Die Erfindung erstreckt sich weiterhin auf ein Verfahren zum Identifizieren (d.h. Erkennen des Vorliegens oder Nicht-Vorliegens) des Sicherheitsmerkmals eines wie vorstehend beschrieben ausgebildeten Wertdokuments. Das Verfahren zum Identifizieren eines Wertdokuments eines Wertdokumentsystems gemäß der Erfindung umfasst die folgenden Schritte:

- Anregen des ersten und ggf. zweiten Lumineszenzstoffs des Sicherheitsmerkmals des ersten und/ oder zweiten Wertdokuments;
- Detektieren des zeitlichen Verlaufs einer Gesamtintensität einer emittierten Strahlung des ersten und ggf. zweiten Lumineszenzstoffs in wenigstens zwei spektral unterschiedlichen Detektionskanälen, wobei mindestens ein Detektionskanal zumindest einen Teilbereich des primären Emissionsbereichs des ersten und zweiten Lumineszenzstoffs umfasst;
- Bestimmen einer effektiven Abklingzeit und/ oder Intensität in den wenigstens zwei Detektionskanälen; und
- Identifizieren einer Kodierung und/ oder Wertdokumentklasse aus dem Sicherheitsmerkmal auf Basis der bestimmten einen oder mehreren Abklingzeiten und/ oder Intensitäten und/ oder Intensitätsverhältnissen und/ oder Abklingzeitverhältnissen des primären Emissionsbereichs.

Vorzugsweise werden die Lumineszenzstoffe des ersten und/ oder zweiten Wertdokuments mittels eines gemeinsamen Anregungspulses angeregt.

Bei einer Ausgestaltung des erfindungsgemäßen Verfahrens wird der primäre Emissionsbereich der Lumineszenzstoffe des Sicherheitsmerkmals des ersten und/ oder zweiten Wertdokuments jeweils in mehreren, voneinander verschiedenen Detektionskanälen umfasst. Die Detektionskanäle können jeweils einen Teilbereich des primären Emissionsbereichs umfassen. Möglich ist jedoch auch, dass ein Teil des primären Emissionsbereichs und/oder weitere Emissionsbereiche vollständig außerhalb aller Detektionskanäle liegen.

Eine Ausführungsform des erfindungsgemäßen Verfahrens kann vorsehen, dass mindestens zwei Detektionskanäle ganz oder teilweise innerhalb des primären Emissionsbereiches der Lumineszenzstoffe des ersten und/ oder zweiten Wertdokuments liegen. Zum Beispiel kann der primäre Emissionsbereich aufgeteilt werden, beispielsweise in zwei gleich große Hälften, wobei jede Hälfte einen Detektionskanal darstellt. Die Detektionskanäle müssen jedoch nicht exakt innerhalb des primären Emissionsbereiches liegen, sondern können auch kleiner oder größer sein und somit z. B. über den primären Emissionsbereich hinausragen, bzw. relativ zu diesem versetzt sein. Insbesondere können mehr als zwei Detektionskanäle, z. B. drei Detektionskanäle innerhalb des primären Emissionsbereiches liegen.

Bei einer vorteilhaften Ausgestaltung des erfindungsgemäßen Verfahrens entsprechen mindestens zwei der Detektionskanäle den Spektralbereichen A, B der Sicherheitsmerkmale der mindestens ersten und gegebenenfalls zweiten Wertdokumente des Wertdokumentsystems.

Bei einer vorteilhaften Ausgestaltung des erfindungsgemäßen Verfahrens umfassen die einzelnen Detektionskanäle jeweils einen Wellenlängenbereich von weniger als 400 nm, bevorzugt weniger als 250 nm, besonders bevorzugt weniger als 100 nm. Gemäß einer Ausgestaltung sind alle Detektionskanäle im Wesentlichen gleich groß, das heißt, sie unterscheiden sich in ihrer Größe um weniger als 10% voneinander. Der Begriff Größe in diesem Zusammenhang entspricht der spektralen Breite (in Nanometer) des Detektionskanals gemessen an der Hälfte der spektralen Detektionsempfindlichkeit. Gemäß einer weiteren Ausgestaltung besitzen die Detektionskanäle zumindest teilweise unterschiedliche Größen (d.h. ein oder mehrere Detektionskanäle unterscheiden sich in ihrer spektralen Breite um mehr als 10%.

Beispielsweise besitzt ein Detektionskanal eine Größe von 100 nm und ein weiterer Detektionskanal weist eine Größe von 150 nm auf. Gemäß einer Ausführungsform liegen die einzelnen Detektionskanäle lückenlos aufeinanderfolgend vor.

Dazu misst beispielsweise ein erster Detektionskanal den Wellenlängenbereich zwischen 900 nm und 1000 nm, ein zweiter Detektionskanal den Wellenlängenbereich zwischen 1000 nm und 1100 nm und ein dritter Detektionskanal den Wellenlängenbereich zwischen 1100 und 1200 nm. Gemäß einer weiteren Ausführungsform weisen ein oder mehrere Detektionskanäle Abstände zueinander auf, in welchen kein weiterer Detektionskanal liegt. Beispielsweise misst ein erster Detektionskanal den Wellenlängenbereich zwischen 900 nm und 1000 nm, ein zweiter Detektionskanal den Wellenlängenbereich zwischen 1000 nm und 1100 nm und ein dritter Detektionskanal den Wellenlängenbereich zwischen 1150 und 1250 nm.

In einer Ausführungsform der Erfindung kann zur Überprüfung des Abklingzeitverhaltens die effektive Abklingzeit $\tau$ bei unterschiedlichen Wellenlängen bzw. Wellenlängenbereichen (d.h. in zwei oder mehr Detektionskanälen) überprüft werden. Die Gesamtintensität kann dabei durch Verwendung von mindestens zwei Stützpunkten mit einem monoexponentiellen Fit der Form $I(t) = A \cdot e^{-t/\tau}$ angepasst werden (Abklingquotient). Dies stellt somit eine Näherung an tatsächlich möglicherweise komplexere Zeitverläufe dar. Es handelt sich hierbei um ein sehr schnelles und einfaches Messverfahren, welches durch die erfindungsgemäße Auswahl von Lumineszenzstoffen bzw. Lumineszenzstoffeigenschaften angewendet werden kann.

Im Gegensatz zu Kombinationen von Lumineszenzstoffen des Stands der Technik, wie sie z.B. aus der Druckschrift US 9046486 B2 bekannt, sind in vorteilhafter Weise keine komplexen Detektionsverfahren notwendig, um eine erhöhte Sicherheit zu erhalten. Des Weiteren haben insbesondere organische Farbstoff-Moleküle im Vergleich zu erfindungsgemäßen Lumineszenzstoffen auf Basis von anorganischen Matrix-basierten Phosphoren breitere Emissionsspektren und deutlich kürzere Abklingzeiten, die oft im Nanosekundenbereich liegen. Weiterhin verfügen sie über wesentlich kleinere Stoke-Shifts. Diese Eigenschaften sind für ein Auslesen bzw. eine Abklingzeitüberprüfung nachteilig. Das erfindungsgemäße Verfahren ermöglicht somit eine relativ einfache, schnelle und zuverlässige Detektion des Sicherheitsmerkmals.

Die Erfindung wird im Folgenden noch weiter beispielhaft an Hand der Zeichnungen erläutert. Es zeigen:

Fig. 1A      zwei Einzelstoff-Emissionsspektren und deren Überlappbereich ÜB;

Fig. 1B      das resultierende Emissionsspektrum der Mischung von den Einzelstoffen aus Fig. 1A sowie dessen primären Emissionsbereich PEB;

Fig. 2      schematisch die zeitliche Evolution von zwei Einzelstoff-Emissionsspektren für die unterschiedlichen Fälle $\tau_1 > \tau_2$, $\tau_1 = \tau_2$ bzw. $\tau_1 < \tau_2$; und

Fig. 3 A-D      schematisch Kombinationen unterschiedlicher Lumineszenzstoffe anhand ihrer jeweiligen $U_{12}$- und $S_{12}$-Werte.

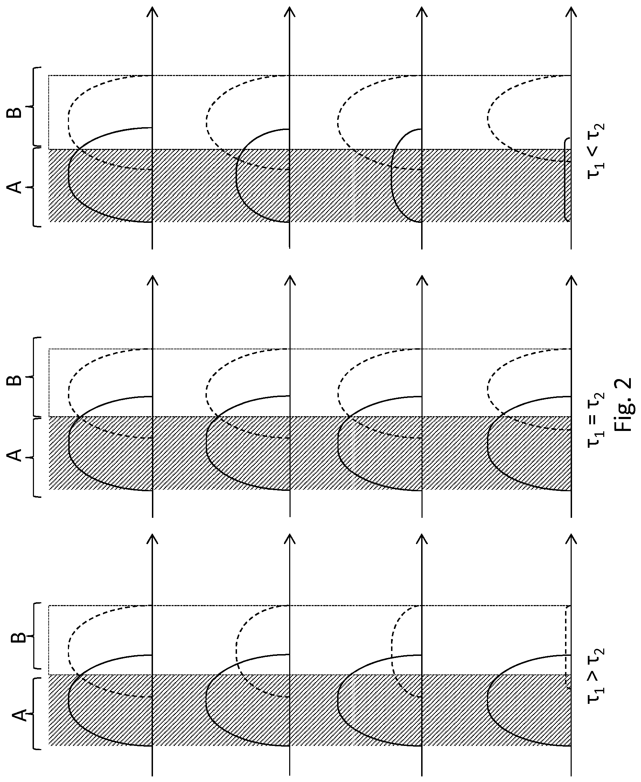

Die Figur 2 zeigt schematisch die zeitliche Evolution von zwei Einzelstoff-Emissionsspektren für die unterschiedlichen Fälle $\tau_1 > \tau_2$, $\tau_1 = \tau_2$ bzw. $\tau_1 < \tau_2$. Dabei ist die emittierte (individuelle) Intensität von zwei Stoffen S1 und S2 im primären Emissionsbereich gegen die Wellenlänge aufgetragen. Veranschaulicht wird in schematischer Weise der zeitliche Verlauf der Emissionsbanden der beiden Lumineszenzstoffe S1 und S2 mit den beiden Abklingzeiten $\tau_1$ bzw. $\tau_2$, wobei in einem Fall ein erster Lumineszenzstoff S1 eine längere Abklingzeit $\tau_1$ (durchgezogene Linie) und ein zweiter Lumineszenzstoff S2 eine kürzere Abklingzeit $\tau_2$ (gestrichelte Linie) aufweist. In einem zweiten Fall weisen sowohl der erste als auch der zweite Lumineszenzstoff S1, S2 eine lange Abklingzeit auf ($\tau_1 = \tau_2$). In einem dritten Fall weisen ein erster Lumineszenzstoff S1 eine kürzere Abklingzeit $\tau_1$ (durchgezogene Linie) und ein zweiter Lumineszenzstoff S2 eine längere Abklingzeit $\tau_2$ (gestrichelte Linie) auf.

Zur Überprüfung eines Sicherheitsmerkmals mit Lumineszenzstoffen S1 und S2 mit individuellen Abklingzeiten $\tau_1$ bzw. $\tau_2$ können unterschiedliche Spektralbereiche A, B (über entsprechende Detektionskanäle K_A, K_B) ausgewertet werden. Hierbei wird das gleiche Emissionsspektrum für die drei Fälle in je zwei unterschiedliche Detektionskanäle K_A, K_B aufgetrennt, wobei sich der zeitliche Verlauf der spektralen Intensität aus den jeweils über- bzw. untereinander angeordneten Diagrammen (von oben nach unten) ergibt.

Ersichtlich bleibt im Beobachtungszeitraum die spektrale Intensität der Emissionsbande mit längerer Abklingzeit unverändert, wohingegen die spektrale Intensität der Emissionsbande mit kürzerer Abklingzeit mit der Zeit stark abnimmt.

In einer Ausführungsform decken die Detektionskanäle K_A und K_B gemeinsam den primären Emissionsbereich ab (in den Diagrammen jeweils gekennzeichnet durch einen schraffierten A-Bereich und einen umrandeten B-Bereich). Demnach sind in den Detektionskanälen K_A und K_B jeweils unterschiedliche Anteile der Emissionsbanden des ersten und zweiten Lumineszenzstoffs enthalten. Im ersten Fall enthält K_A mehr Emissionsanteile des langsam abklingenden Lumineszenzstoffs S1 und weniger Emissionsanteile des schnell abklingenden Lumineszenzstoffs S2. Somit ist die im Detektionskanal K_A gemessene Gesamtabklingzeit relativ lang. Im Unterschied hierzu enthält der Detektionskanal K_B mehr Emissionsanteile des schnell abklingenden Lumineszenzstoffs S2 und weniger Emissionsanteile des langsam abklingenden Lumineszenzstoffs S1. Somit ist die im Detektionskanal K_B gemessene Gesamtabklingzeit relativ kurz.

Im zweiten Fall sind beide Lumineszenzstoffe S1 und S2 langsam abklingend und besitzen dieselbe Abklingzeit. Es wird also sowohl in Detektionskanal K_A als auch Detektionskanal K_B dieselbe lange Gesamtabklingzeit gemessen.

Im dritten Fall enthält Kanal K_A mehr Emissionsanteile des schnell abklingenden Lumineszenzstoffs S1 und weniger Emissionsanteile des langsam abklingenden Lumineszenzstoffs S2. Somit ist die im Detektionskanal K_A gemessene Gesamtabklingzeit relativ kurz und die im Detektionskanal K_B gemessene Gesamtabklingzeit relativ lang.

Abweichend von diesem vereinfachten Schema kann auch mit mehr als zwei spektralen Bereichen (Detektionskanälen), beispielsweise drei Detektionskanälen, gearbeitet werden. Weiterhin sind diese Detektionskanäle normalerweise nicht, wie hier schematisch dargestellt, scharf getrennt, sondern werden durch den spektralen Verlauf der Empfindlichkeitskurve des Detektors oder der Filterkurve eines im Detektors verwendeten Filters geformt.

Die Erfindung beschreibt ein Wertdokumentsystem mit speziellen Sicherheitsmerkmalen, bestehend aus einer speziellen Kombination von mindestens zwei Lumineszenzstoffen, deren Emissionsspektren teilweise überlappen. Durch eine erfindungsgemäße Auswahl geeigneter Stoffe und Stoffeigenschaften kann so ein Wertdokumentsystem mit vorteilhaften Eigenschaften erzeugt werden:

- erhöhte Anzahl von Kodierungen
- verbesserte Fälschungssicherheit wegen erschwerter Analyse und Nachahmung (exotische Spektren,...)
- Nachweis und Trennbarkeit mit einem kostengünstigen einfachen Sensor mit wenigen, z. B. 2, Spektralkanälen möglich
- verbesserte Herstellbarkeit durch Skaleneffekte und günstige Stoffeigenschaften

Die Eigenschaften sind weiterhin so gewählt, dass eine Überprüfung auch bei hohen Transportgeschwindigkeiten der Banknote möglich ist.

In den folgenden Ausführungsbeispielen werden die unterschiedlichen Lumineszenzstoffe qualitativ als "langsam abklingend" oder "schnell abklingend" bezeichnet. Damit ist gemeint, dass die "schnell abklingenden" Stoffe relativ zu den "langsam abklingenden" Stoffen desselben Beispiels eine deutlich kürzere Abklingzeit besitzen. Es ist damit kein Vergleich zwischen Stoffen aus unterschiedlichen Beispielen gemeint. Quantitative Aussagen zu Abklingzeiten der Lumineszenzstoffe und deren Mischungen sind durch die V- und S-Werte in den Beispielen gegeben.

In den folgenden Ausführungsbeispielen werden unterschiedliche Lumineszenzstoffe zu Stoffmischungen kombiniert. Eine Bezeichnung wie "50% A, 50% C" bedeutet dabei, dass sowohl Lumineszenzstoff A als auch Lumineszenzstoff B in einem derartigen Mengenverhältnis eingesetzt wurden, dass ihre individuelle Intensität jeweils 50% zur Gesamtintensität beiträgt. Es bedeutet nicht notwendigerweise, dass die beiden Lumineszenzstoffe im gleichen Massenanteil in der Stoffmischung einsetzt wurden. Eine alternative einfache Methode zur Herstellung solcher Stoffmischungen ist beispielsweise, die einzelnen Lumineszenzstoffe zuerst mit einem nicht lumineszierenden Füllstoff so zu verdünnen, dass alle (verdünnten) Lumineszenzstoffe die gleiche individuelle Intensität besitzen. In diesem Fall entsprechen dann die angegebenen Prozentwerte den jeweiligen Masseanteilen der (verdünnten) Lumineszenzstoffe in den Stoffmischungen.

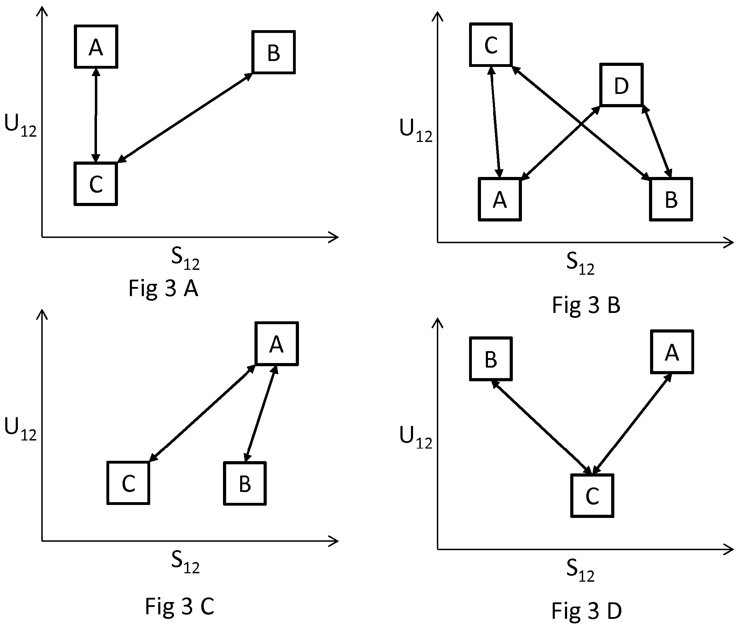

Die Figuren 3A-D zeigen schematische Ausführungsbeispiele, nämlich Beispiel 1 (Fig. 3A), Beispiel 2 (Fig. 3B), Beispiel 3 (Fig. 3C) und Beispiel 4 (Fig. 3D). Die Ausführungsbeispiele betreffen Lumineszenzstoffe A, B, C bzw. D.

Diese sind anhand ihrer jeweiligen $U_{12}$- und $S_{12}$-Werte in die Diagramme eingetragen. Die Doppelpfeile kennzeichnen dabei welche der sich spektral ergänzenden Lumineszenzstoffe im Rahmen des jeweiligen Ausführungsbeispiels miteinander vermischt werden, um zusätzliche Kodierungen zu erzeugen. Die Doppelpfeile kennzeichnen jedoch nicht notwendigerweise den Verlauf der $U_{12}$- und $S_{12}$-Werte derartiger Mischungen, sondern sind rein symbolisch. Die genauen $U_{12}$- und $S_{12}$-Werte der jeweiligen Mischungen können den entsprechenden Tabellen der Ausführungsbeispiele entnommen werden. Die Auftragung der $U_{12}$- und $S_{12}$-Werte erfolgt hier beispielhaft zur besseren Visualisierung der Ausführungsbeispiele. Neben den $U_{12}$- und $S_{12}$-Werten existieren weitere Werte, insbesondere die $V_{12}$-Werte, welche zur Trennung der unterschiedlichen Kodierungen herangezogen werden, jedoch hier nicht aufgetragen wurden. Eine Kodierung wird im Rahmen der Ausführungsbeispiele auch als "Code" bezeichnet.

Ein erstes Ausführungsbeispiel gemäß der Erfindung betrifft ein Wertdokumentsystem mit Lumineszenzstoffen, die auf Neodym basieren. Zur Erstellung des Wertdokumentsystems werden zwei mit unterschiedlichen Mengen Neodym dotierte Lutetium-Aluminium-Granate und ein mit Neodym dotiertes Yttrium-Oxysulfid eingesetzt:

Lumineszenzstoff A: LuAG:Nd, schnell abklingend
Lumineszenzstoff B: LuAG:Nd, langsam abklingend
Lumineszenzstoff C: $Y_2O_2S$:Nd, schnell abklingend

Die Lumineszenzstoffe zeigen bei Anregung bei 810 nm jeweils ein komplexes Emissionsspektrum aus mehreren Banden im Bereich 1030-1130 nm.

Das Emissionsspektrum wird in drei Spektralbereiche aufgeteilt, welche den Detektionskanälen K1, K2, K3 des Sensors entsprechen. Die in den jeweiligen Spektralbereichen detektierten Gesamtintensitäten werden entsprechend als I_1, I_2, I_3 bezeichnet und die Gesamtabklingzeiten als $\tau$_1, $\tau$_2, $\tau$_3. Die Spektralbereiche erstrecken sich dabei über die folgenden Wellenlängenbereiche:

K1: 1050 - 1075 nm $\rightarrow$ I_1, $\tau$_1
K2: 1175 - 1100 nm $\rightarrow$ I_2, $\tau$_2
K3: 1100 - 1125 nm $\rightarrow$ I_3, $\tau$_3

Zur Unterscheidung der unterschiedlichen Kodierungen des Wertdokumentsystems werden die Intensitätsverhältnisse U, Abklingzeitverhältnisse V und die Abklingzeitsumme S zwischen den unterschiedlichen Detektionskanälen genutzt. Diese können durch Kombination aus einem der beiden Lumineszenzstoffe A oder B mit dem Lumineszenzstoff C eingestellt werden. Zusätzlich können die reinen Einzelstoffe von derartigen Stoffmischungen unterschieden werden.

Dabei bezeichnet beispielsweise $U_{12}$ das Intensitätsverhältnis zwischen K1 und K2:

$$U_{12} = I\_1 \,/\, I\_2$$

Analog gilt:

$$U_{23} = I\_2 \,/\, I\_3$$

$$U_{13} = I\_1 \,/\, I\_3$$

$$V_{12} = \tau\_1 \,/\, \tau\_2$$

$$V_{13} = \tau\_1 \,/\, \tau\_3$$

$$V_{23} = \tau\_2 \,/\, \tau\_3$$

$$S_{12} = \tau\_1 + \tau\_2$$

$$S_{13} = \tau\_1 + \tau\_3$$

$$S_{23} = \tau\_2 + \tau\_3$$

Bei den in diesem Ausführungsbeispiel angegebenen Abklingzeiten handelt es sich um effektive Abklingzeiten. Für ihre Bestimmung werden die Lumineszenzstoffe bzw. Stoffmischungen durch einen Anregungspuls angeregt, nach dem Ablauf einer ersten Wartezeit eine Intensität bestimmt, nach dem Ablauf einer zweiten Wartezeit eine weitere Intensität bestimmt, und aus dem Intensitätsunterschied bei der ersten und der zweiten Wartezeit die effektive Abklingzeit bestimmt. Dazu werden im Rahmen des Beispiels 1 die Intensitätswerte $I_{100}$ nach 100 $\mu$s und $I_{300}$ nach 300 $\mu$s gemessen und die effektive Abklingzeit $\tau$ wie folgt ermittelt:

$$\tau = -200\ \mu s \,/\, \ln(I_{300}/I_{100})$$

Werden die Intensitätswerte z.B. bei zwei anderen Zeiten als Basis genommen oder eine anderer Algorithmus zur Bestimmung der effektiven Abklingzeiten angewandt, so ergeben sich andere Gesamtabklingzeiten. Es ist daher zur Nachstellung der Messdaten bzw. Prüfkriterien solcher erfindungsgemäßer Merkmale erforderlich, die Messparameter genau zu kennen, wodurch die Schutzwirkung deutlich erhöht wird.

| Code | Eingesetzte Lumineszenz-stoffe | $U_{12}$ | $U_{13}$ | $U_{23}$ | $V_{12}$ | $V_{13}$ | $V_{23}$ | $S_{12}$ [$\mu$s] | $S_{13}$ [$\mu$s] | $S_{23}$ [$\mu$s] |
|---|---|---|---|---|---|---|---|---|---|---|
| 1 | 100% A | 4.33 | 2.89 | 0.67 | 1 | 1 | 1 | 178 | 178 | 178 |
| 2 | 67% A, 33% C | 1.45 | 2.78 | 1.92 | 1 | 1 | 1 | 178 | 178 | 178 |

(fortgesetzt)

| Code | Eingesetzte Lumineszenz-stoffe | $U_{12}$ | $U_{13}$ | $U_{23}$ | $V_{12}$ | $V_{13}$ | $V_{23}$ | $S_{12}$ [µs] | $S_{13}$ [µs] | $S_{23}$ [µs] |
|------|-------------------------------|----------|----------|----------|----------|----------|----------|---------------|---------------|---------------|
| 3 | 50% A, 50% C | 0.95 | 2.70 | 2.85 | 1 | 1 | 1 | 178 | 178 | 178 |
| 4 | 33% A, 67% C | 0.63 | 2.59 | 4.11 | 1 | 1 | 1 | 178 | 178 | 178 |
| 5 | 100% C | 0.26 | 2.21 | 8.41 | 1 | 1 | 1 | 178 | 178 | 178 |
| 6 | 100% B | 4.27 | 3.07 | 0.72 | 1 | 1 | 1 | 562 | 562 | 562 |
| 7 | 67% B, 33% C | 1.45 | 2.92 | 2.02 | 1.62 | 1.02 | 0.62 | 423 | 518 | 416 |
| 8 | 50% B, 50% C | 0.95 | 2.82 | 2.97 | 1.84 | 1.04 | 0.56 | 380 | 483 | 370 |
| 9 | 33% B, 67% C | 0.63 | 2.68 | 4.24 | 1.93 | 1.06 | 0.55 | 337 | 431 | 323 |

Die Codes 1 bis 9 können basierend auf ihren U-, V-, und S-Werten voneinander unterschieden werden, so dass es möglich ist, mit ihnen ein Wertdokumentsystem aufzustellen.

Beispiel 1a: Wertdokumentsystem mit 9 Kodierungen

Die Einzelstoffe bzw. Stoffmischungen der Codes 1 bis 9 werden jeweils benutzt, um eine Art von Wertdokument abzusichern. Beispielsweise wird Code 1 in die Papiermasse einer ersten Währung zugefügt, Code 2 in die Papiermasse einer zweiten Währung zugefügt, Code 3 in die Papiermasse einer dritten Währung zugefügt, etc., wodurch insgesamt 9 unterschiedliche Währungen mit einer individuellen Kodierung versehen werden können.

Beispiel 1b: Wertdokumentsystem mit 2 Kodierungen

Die Stoffmischung von Code 2 wird in die Papiermasse einer ersten Währung eingebracht. Die Stoffmischung von Code 3 wird in die Papiermasse einer zweiten Währung eingebracht. Beide Währungen können basierend auf ihren U-, V-, und S-Werten voneinander unterschieden werden.

Beispiel 1c: Wertdokumentsystem mit 2 Kodierungen

Die Stoffmischung von Code 4 wird in die Papiermasse einer ersten Währung eingebracht. Die Stoffmischung von Code 9 wird in die Papiermasse einer zweiten Währung eingebracht. Beide Währungen können basierend auf ihren U-, V-, und S-Werten voneinander unterschieden werden.

Beispiel 1d: Wertdokumentsystem mit 3 Kodierungen

Die Stoffmischung aus Code 7 wird in die Druckfarbe einer ersten Währung gemischt und aufgedruckt. Die Stoffmischung aus Code 8 wird in die Druckfarbe einer zweiten Währung gemischt und aufgedruckt. Die Stoffmischung aus Code 9 wird in die Druckfarbe einer dritten Währung gemischt und aufgedruckt. Die drei Währungen können basierend auf ihren U-, V-, und S-Werten voneinander unterschieden werden.
In einem weiteren, zweiten Ausführungsbeispiel wird ein Wertdokumentsystem mit Lumineszenzstoffen basierend auf Ytterbium beschrieben. Dabei werden zwei mit unterschiedlichen Mengen Ytterbium dotierte Lutetium-Aluminium-Granate, ein mit Ytterbium dotiertes Yttriumphosphat und ein mit Ytterbium dotiertes Gadolinium-Oxysulfid eingesetzt:

Lumineszenzstoff A: LuAG:Yb / schnell abklingend
Lumineszenzstoff B: LuAG:Yb / langsam abklingend
Lumineszenzstoff C: $Gd_2O_2S$:Yb / schnell abklingend
Lumineszenzstoff D: $YPO_4$:Yb / langsam abklingend

Die Lumineszenzstoffe zeigen bei Anregung bei 945 nm eine Emission im Bereich 950-1100 nm.
Das Emissionsspektrum wird in zwei Spektralbereiche aufgeteilt, welche den Detektionskanälen K1, K2 des Sensors entsprechen. Die in den jeweiligen Spektralbereichen detektierten Gesamtintensitäten werden entsprechend als I_1 und I_2 bezeichnet und die Gesamtabklingzeiten als $\tau$_1 und $\tau$_2. Die Spektralbereiche erstrecken sich dabei über die folgenden Wellenlängenbereiche:

K1: 950 - 1000 nm → I_1, $\tau$_1
K2: 1000 - 1100 nm → I_2, $\tau$_2

Zur Unterscheidung der unterschiedlichen Kodierungen des Wertdokumentsystems werden das Intensitätsverhältnis U, Abklingzeitverhältnis V und die Abklingzeitsumme S der beiden Detektionskanäle genutzt. Diese können durch Kombination aus einem der beiden Lumineszenzstoffe A oder B mit einem der beiden Lumineszenzstoffe C oder D eingestellt werden. Zusätzlich können die reinen Einzelstoffe von derartigen Stoffmischungen unterschieden werden.
Dabei bezeichnet beispielsweise $U_{12}$ das Intensitätsverhältnis zwischen K1 und K2:

$$U_{12} = I\_1 \;/\; I\_2$$

Analog gilt:

$$V_{12} = \tau\_1 \;/\; \tau\_2$$

$$S_{12} = \tau\_1 + \tau\_2$$

Bei den im Beispiel angegebenen Abklingzeiten handelt es sich um effektive Abklingzeiten. Für ihre Bestimmung werden die Lumineszenzstoffe bzw. Stoffmischungen durch einen Anregungspuls angeregt, nach dem Ablauf einer ersten Wartezeit eine Intensität bestimmt, nach dem Ablauf einer zweiten Wartezeit eine Intensität bestimmt, und aus dem Intensitätsunterschied bei der ersten und der zweiten Wartezeit die effektive Abklingzeit bestimmt. Dazu werden im Rahmen des Beispiels 2 die Intensitätswerte $I_{100}$ nach 100 $\mu$s und $I_{300}$ nach 300 $\mu$s gemessen und die effektive Abklingzeit $\tau$ wie folgt ermittelt:

$$\tau = -200\ \mu s \;/\; \ln(I_{300}/I_{100})$$

Werden die Intensitätswerte z.B. bei zwei anderen Zeiten als Basis genommen oder ein anderer Algorithmus zur Bestimmung der effektiven Abklingzeiten angewandt, so ergeben sich andere Gesamtabklingzeiten. Es ist daher zur Nachstellung der Messdaten bzw. Prüfkriterien solcher erfindungsgemäßer Merkmale erforderlich, die Messparameter genau zu kennen, wodurch die Schutzwirkung deutlich erhöht wird.

| Code | Eingesetzte Lumineszenzstoffe | $U_{12}$ | $V_{12}$ | $S_{12}$ [$\mu$s] |
|------|-------------------------------|----------|----------|-------------------|
| 2-1  | 100% A           | 0.38 | 1    | 400  |
| 2-2  | 100% B           | 0.37 | 1    | 1820 |
| 2-3  | 100% C           | 5.55 | 1    | 360  |
| 2-4  | 100% D           | 2.35 | 1    | 1440 |
| 2-5  | 25% B, 75% D     | 1.46 | 0.92 | 1535 |
| 2-6  | 50% B, 50% D     | 0.94 | 0.90 | 1614 |
| 2-7  | 75% B, 25% D     | 0.60 | 0.92 | 1696 |
| 2-8  | 25% A, 75% C     | 2.38 | 0.95 | 310  |
| 2-9  | 50% A, 50% C     | 1.28 | 0.94 | 381  |
| 2-10 | 75% A, 25% C     | 0.72 | 0.95 | 388  |
| 2-11 | 25% A, 75% D     | 1.47 | 1.50 | 1035 |
| 2-12 | 50% A, 50% D     | 0.96 | 1.69 | 805  |
| 2-13 | 75% A, 25% D     | 0.62 | 1.55 | 607  |
| 2-14 | 25% B, 75% C     | 2.36 | 0.43 | 710  |
| 2-15 | 50% B, 50% C     | 1.26 | 0.40 | 962  |
| 2-16 | 75% B, 25% C     | 0.70 | 0.50 | 1222 |

Die Codes 2-1 bis 2-16 können basierend auf ihren U-, V-, und S-Werten voneinander unterschieden werden, so dass es möglich ist, mit ihnen ein Wertdokumentsystem aufzustellen.

Beispiel 2a: Wertdokumentsystem mit 16 Kodierungen

Die Einzelstoffe bzw. Stoffmischungen der Codes 2-1 bis 2-16 werden jeweils benutzt, um eine Art von Wertdokument abzusichern. Beispielsweise wird Code 2-1 in die Papiermasse einer ersten Währung zugefügt, Code 2-2 in die Papiermasse einer zweiten Währung zugefügt, Code 2-3 in die Papiermasse einer dritten Währung zugefügt, etc., wodurch insgesamt 16 unterschiedliche Währungen mit einer individuellen Kodierung versehen werden können.

Beispiel 2b: Wertdokumentsystem mit 2 Kodierungen

Die Stoffmischung von Code 2-12 wird in die Papiermasse einer ersten Währung eingebracht. Die Stoffmischung von Code 2-15 wird in die Papiermasse einer zweiten Währung eingebracht. Beide Währungen können basierend auf ihren U-, V-, und S-Werten voneinander unterschieden werden.

Ein weiteres, drittes Ausführungsbeispiel betrifft ein Wertdokumentsystem mit Lumineszenzstoffen, die auf Erbium basieren. Dabei werden die folgenden drei Stoffe eingesetzt: ein mit Erbium dotierter Yttrium-Aluminium-Granat, ein mit Erbium dotiertes Yttriumvanadat ohne zusätzlichen Quencher und ein mit Erbium dotiertes Yttriumvanadat mit einer geringen Samarium-Kodotierung, um die Abklingzeit zu senken:

Lumineszenzstoff A: YAG:Er / langsam abklingend
Lumineszenzstoff B: $YVO_4$:Er / langsam abklingend
Lumineszenzstoff C: $YVO_4$:Er, Sm / schnell abklingend

Die Lumineszenzstoffe zeigen bei Anregung bei einer Wellenlänge von 970 nm eine Emission im Bereich 1400-1700 nm.

Das Emissionsspektrum wird in drei Spektralbereiche aufgeteilt, welche den Detektionskanälen K1, K2, K3 des Sensors entsprechen. Die in den jeweiligen Spektralbereichen detektierten Gesamtintensitäten werden entsprechend als I_1, I_2, I_3 bezeichnet und die Gesamtabklingzeiten als $\tau$_1, $\tau$_2, $\tau$_3. Die Spektralbereiche erstrecken sich dabei über die folgenden Wellenlängenbereiche:

K1: 1400 - 1500 nm $\rightarrow$ I_1, $\tau$_1
K2: 1500 - 1600 nm $\rightarrow$ I_2, $\tau$_2
K2: 1600 - 1700 nm $\rightarrow$ I_3, $\tau$_3

Zur Unterscheidung der unterschiedlichen Kodierungen des Wertdokumentsystems werden das Intensitätsverhältnis U, Abklingzeitverhältnis V und die Abklingzeitsumme S der beiden Detektionskanäle genutzt. Diese können durch Kombination aus dem Lumineszenzstoff A mit einem der beiden Lumineszenzstoffe B oder C eingestellt werden. Zusätzlich können die reinen Einzelstoffe von Stoffmischungen aus den Einzelstoffen unterschieden werden.

Dabei bezeichnet beispielsweise $U_{12}$ das Intensitätsverhältnis zwischen K1 und K2:

$$U_{12} = I\_1 \ / \ I\_2$$

Analog gilt:

$$U_{23} = I\_2 \ / \ I\_3$$

$$U_{13} = I\_1 \ / \ I\_3$$

$$V_{12} = \tau\_1 \ / \ \tau\_2$$

$$V_{13} = \tau\_1 \ / \ \tau\_3$$

$$V_{23} = \tau\_2 \ / \ \tau\_3$$

$$S_{12} = \tau\_1 + \tau\_2$$

$$S_{13} = \tau\_1 + \tau\_3$$

$$S_{23} = \tau\_2 + \tau\_3$$

Bei den im Beispiel angegebenen Abklingzeiten handelt es sich um effektive Abklingzeiten. Für ihre Bestimmung werden die Lumineszenzstoffe bzw. Stoffmischungen durch einen Anregungspuls angeregt, nach dem Ablauf einer ersten Wartezeit eine Intensität bestimmt, nach dem Ablauf einer zweiten Wartezeit eine Intensität bestimmt, und aus dem Intensitätsunterschied bei der ersten und der zweiten Wartezeit die effektive Abklingzeit bestimmt. Dazu werden im Rahmen des Beispiel 3 die Intensitätswerte $I_{100}$ nach 100 µs und $I_{500}$ nach 500 µs gemessen und die effektive Abklingzeit $\tau$ wie folgt ermittelt:

$$\tau = \text{-400 µs} \; / \; \ln(I_{500}/I_{100})$$

Werden die Intensitätswerte z. B. bei zwei anderen Zeiten als Basis genommen oder ein anderer Algorithmus zur Bestimmung der effektiven Abklingzeiten angewandt, so ergeben sich andere Gesamtabklingzeiten. Es ist daher zur Nachstellung der Messdaten bzw. Prüfkriterien solcher erfindungsgemäßer Merkmale erforderlich, die Messparameter genau zu kennen, wodurch die Schutzwirkung deutlich erhöht wird.

| Code | Eingesetzte Lumineszenzstoffe | $U_{12}$ | $U_{13}$ | $U_{23}$ | $V_{12}$ | $V_{13}$ | $V_{23}$ | $S_{12}$ [µs] | $S_{13}$ [µs] | $S_{23}$ [µs] |
|------|-------------------------------|----------|----------|----------|----------|----------|----------|-----------|-----------|-----------|
| 3-1 | 100% A | 0.40 | 0.40 | 0.99 | 1 | 1 | 1 | 2400 | 2400 | 2400 |
| 3-2 | 100% B | 0.11 | 1.26 | 11.91 | 1 | 1 | 1 | 2200 | 2200 | 2200 |
| 3-3 | 100% C | 0.11 | 1.26 | 11.91 | 1 | 1 | 1 | 800 | 800 | 800 |
| 3-4 | 25% A, 75% B | 0.15 | 0.69 | 4.65 | 1.02 | 0.98 | 0.96 | 2250 | 2302 | 2278 |
| 3-5 | 50% A, 50% B | 0.20 | 0.52 | 2.56 | 1.03 | 0.98 | 0.96 | 2295 | 2349 | 2316 |
| 3-6 | 75% A, 25% B | 0.28 | 0.44 | 1.56 | 1.02 | 0.99 | 0.97 | 2342 | 2378 | 2352 |
| 3-7 | 25% A, 75% C | 0.15 | 0.69 | 4.65 | 1.29 | 0.74 | 0.57 | 1071 | 1419 | 1282 |
| 3-8 | 50% A, 50% C | 0.20 | 0.52 | 2.56 | 1.41 | 0.80 | 0.56 | 1374 | 1814 | 1581 |
| 3-9 | 75% A, 25% C | 0.28 | 0.44 | 1.56 | 1.32 | 0.89 | 0.67 | 1759 | 2127 | 1882 |

Die Codes 3-1 bis 3-9 können basierend auf ihren U-, V-, und S-Werten voneinander unterschieden werden, so dass es möglich ist mit ihnen ein Wertdokumentsystem aufzustellen.

Beispiel 3a: Wertdokumentsystem mit 9 Kodierungen

Die Einzelstoffe bzw. Stoffmischungen der Codes 3-1 bis 3-9 werden jeweils benutzt, um eine Art von Wertdokument abzusichern. Beispielsweise wird Code 3-1 in die Papiermasse einer ersten Währung zugefügt, Code 3-2 in die Papiermasse einer zweiten Währung zugefügt, Code 3-3 in die Papiermasse einer dritten Währung zugefügt, etc., wodurch insgesamt neun unterschiedliche Währungen mit einer individuellen Kodierung versehen werden können.

Beispiel 3b: Wertdokumentsystem mit 2 Kodierungen

Die Stoffmischung von Code 3-7 wird in die Papiermasse einer ersten Währung eingebracht. Die Stoffmischung von Code 3-9 wird in die Papiermasse einer zweiten Währung eingebracht. Beide Währungen können basierend auf ihren U-, V-, und S-Werten voneinander unterschieden werden.

Bei einem weiteren, vierten Ausführungsbeispiel gemäß der Erfindung handelt es sich um ein Wertdokumentsystem mit Lumineszenzstoffen, basierend auf Thulium und Holmium. Dabei werden die folgenden drei Stoffe eingesetzt: ein mit Thulium dotierter Lutetium-Aluminium-Granat ohne zusätzlichen Quencher, ein mit Thulium dotierter Lutetium-Aluminium -Granat mit einer geringen Praseodym-Kodotierung, um die Abklingzeit zu senken, und ein mit Neodym, Ytterbium und Holmium dotiertes Yttrium-Oxysulfid.

Lumineszenzstoff A: LuAG:Tm / langsam abklingend
Lumineszenzstoff B: LuAG:Tm, Pr / schnell abklingend
Lumineszenzstoff C: $Y_2O_2S$:Nd, Yb, Ho / langsam abklingend

Die Lumineszenzstoffe zeigen bei Anregung bei 810 nm eine Emission im Bereich 1600-2100 nm.

Das Emissionsspektrum wird in zwei Spektralbereiche aufgeteilt, welche den Detektionskanälen K1, K2 des Sensors entsprechen. Die in den jeweiligen Spektralbereichen detektierten Gesamtintensitäten werden entsprechend als I_1 und I_2 bezeichnet und die Gesamtabklingzeiten als $\tau$_1 und $\tau$_2. Die Spektralbereiche erstrecken sich dabei über die folgenden Wellenlängenbereiche:

K1: 1500 - 2000 nm $\rightarrow$ I_1, $\tau$_1
K2: 2000 - 2100 nm $\rightarrow$ I_2, $\tau$_2

Zur Unterscheidung der unterschiedlichen Kodierungen des Wertdokumentsystems werden das Intensitätsverhältnis U, das Abklingzeitverhältnis V und die Abklingzeitsumme S der beiden Detektionskanäle genutzt. Diese können durch Kombination aus einem der beiden Lumineszenzstoffe A oder B mit Lumineszenzstoff C eingestellt werden. Zusätzlich können die reinen Einzelstoffe von derartigen Stoffmischungen unterschieden werden.

Dabei bezeichnet beispielsweise $U_{12}$ das Intensitätsverhältnis zwischen K1 und K2:

$$U_{12} = I\_1 \ / \ I\_2$$

Analog gilt:

$$V_{12} = \tau\_1 \ / \ \tau\_2$$

$$S_{12} = \tau\_1 + \tau\_2$$

Bei den im Beispiel angegebenen Abklingzeiten handelt es sich um effektive Abklingzeiten. Für ihre Bestimmung werden die Lumineszenzstoffe bzw. Stoffmischungen durch einen Anregungspuls angeregt, nach dem Ablauf einer ersten Wartezeit eine Intensität bestimmt, nach dem Ablauf einer zweiten Wartezeit eine Intensität bestimmt, und aus dem Intensitätsunterschied bei der ersten und der zweiten Wartezeit die effektive Abklingzeit bestimmt. Dazu werden im Rahmen des Beispiels 4 die Intensitätswerte $I_{100}$ nach 100 $\mu$s und $I_{500}$ nach 500 $\mu$s gemessen und die effektive Abklingzeit $\tau$ wie folgt ermittelt:

$$\tau = \text{-}400 \ \mu s \ / \ \ln(I_{500}/I_{100})$$

Werden die Intensitätswerte z. B. bei zwei anderen Zeiten als Basis genommen oder ein anderer Algorithmus zur Bestimmung der effektiven Abklingzeiten angewandt, so ergeben sich andere Gesamtabklingzeiten. Es ist daher zur Nachstellung der Messdaten bzw. Prüfkriterien solcher erfindungsgemäßer Merkmale erforderlich, die Messparameter genau zu kennen, wodurch die Schutzwirkung deutlich erhöht wird.

| Code | Eingesetzte Lumineszenzstoffe | $U_{12}$ | $V_{12}$ | $S_{12}[\mu s]$ |
|---|---|---|---|---|
| 4-1 | 100% A | 9.34 | 1 | 2400 |
| 4-2 | 100% B | 9.09 | 1 | 1200 |
| 4-3 | 100% C | 0.80 | 1 | 1800 |
| 4-4 | 25% A, 75% C | 1.27 | 1.10 | 1920 |
| 4-5 | 50% A, 50% C | 2.07 | 1.16 | 2024 |
| 4-6 | 75% A, 25% C | 3.73 | 1.16 | 2139 |
| 4-7 | 25% B, 75% C | 1.27 | 0.87 | 1640 |
| 4-8 | 50% B, 50% C | 2.06 | 0.81 | 1529 |
| 4-9 | 75% B, 25% C | 3.69 | 0.81 | 1413 |

Die Codes 4-1 bis 4-9 können basierend auf ihren U-, V-, und S-Werten voneinander unterschieden werden, so dass es möglich ist, mit ihnen ein Wertdokumentsystem aufzustellen.

Beispiel 4a: Wertdokumentsystem mit 9 Kodierungen

Die Einzelstoffe bzw. Stoffmischungen der Codes 4-1 bis 4-9 werden jeweils benutzt, um eine Art von Wertdokument abzusichern. Beispielsweise wird Code 4-1 in die Papiermasse einer ersten Währung zugefügt, Code 4-2 in die Papiermasse einer zweiten Währung zugefügt, Code 4-3 in die Papiermasse einer dritten Währung zugefügt, etc., wodurch insgesamt neun unterschiedliche Währungen mit einer individuellen Kodierung versehen werden können.

Beispiel 4b: Wertdokumentsystem mit 2 Kodierungen

Die Stoffmischung von Code 4-5 wird in die Papiermasse einer ersten Währung eingebracht. Die Stoffmischung von Code 4-8 wird in die Papiermasse einer zweiten Währung eingebracht. Beide Währungen können basierend auf ihren U-, V-, und S-Werten voneinander unterschieden werden.

**Patentansprüche**

1. Wertdokumentsystem, umfassend wenigstens ein erstes Wertdokument und ein zweites Wertdokument wobei

• das erste Wertdokument ein Sicherheitsmerkmal aus einer Kombination von mindestens einem ersten und einem zweiten Lumineszenzstoff aufweist, wobei

i. der erste Lumineszenzstoff des Sicherheitsmerkmals des ersten Wertdokuments ein Lumineszenzstoff einer ersten Stoffklasse, nämlich dotierte Granatstrukturen, ist und aus dotierten Yttrium-Aluminium-Granaten (YAG), Lutetium-Aluminium-Granaten (LuAG), Gadolinium-Gallium-Granaten (GGG), Gadolinium-Scandium-Gallium-Granaten (GSGG), Yttrium-Scandium-Gallium-Granaten (YSGG), Calcium-Niob-Gallium-Granaten (CNGG), Gadolinium-Scandium-Aluminium-Granaten (GSAG), Calcium-Lithium-Niob-Gallium-Granaten (CLNGG), übergangsmetallhaltigen Granatstrukturen, insbesondere Yttrium-Eisen-Granaten (YIG) oder Mischvarianten dieser Granatstrukturen ausgewählt ist;
ii. der zweite Lumineszenzstoff des Sicherheitsmerkmals des ersten Wertdokuments ein Lumineszenzstoff einer zweiten Stoffklasse ist, nämlich von dotierten Seltenerd-Oxysulfiden, dotierten Seltenerd-Phosphaten und dotierten Seltenerd-Vanadaten gewählt ist;
iii. der erste und der zweite Lumineszenzstoff des Sicherheitsmerkmals des ersten Wertdokuments teilweise überlappende Emissionsspektren aufweisen;
iv. der erste und der zweite Lumineszenzstoff des Sicherheitsmerkmals des ersten Wertdokuments gemeinsam bei einer Wellenlänge anregbar sind;
v. der erste und der zweite Lumineszenzstoff des Sicherheitsmerkmals des ersten Wertdokuments eine Abklingzeit von weniger als 5 ms aufweisen; und
vi. der erste und zweite Lumineszenzstoff des Sicherheitsmerkmals des ersten Wertdokuments ausgebildet sind, dass deren primärer Emissionsbereich der teilweise überlappenden Emissionsspektren in zwei unterschiedliche, unmittelbar benachbarte Spektralbereiche, nämlich einen ersten und einen zweiten Spektralbereich (A, B), aufteilbar ist, welche eine Breite von mindestens 50 nm und maximal 500 nm aufweisen, wobei der primäre Emissionsbereich im IR-Bereich, d.h. zwischen 700 nm und 2000 nm, liegt;
vii. sowohl der erste Lumineszenzstoff des Sicherheitsmerkmals des ersten Wertdokuments als auch der zweite Lumineszenzstoff des Sicherheitsmerkmals des ersten Wertdokuments mindestens einen Dotierstoff aus der Gruppe Nd, Yb, Er, Tm, Ho erfordern;

• das zweite Wertdokument ein Sicherheitsmerkmal mit wenigstens einem ersten Lumineszenzstoff aus der ersten Stoffklasse oder aus der zweiten Stoffklasse mit einer Abklingzeit von weniger als 5 ms aufweist, dessen Emission zumindest teilweise in mindestens einem der benachbarten Spektralbereiche A, B liegt;
• das Sicherheitsmerkmal des ersten Wertdokuments gegenüber dem Sicherheitsmerkmal des zweiten Wertdokuments zumindest ein unterschiedliches Intensitätsverhältnis der Emission, ein unterschiedliches Abklingzeitverhältnis und/ oder eine unterschiedliche Abklingzeitsumme in den zwei benachbarten Spektralbereichen A, B aufweist.

2. Wertdokumentsystem nach Anspruch 1, wobei das Intensitätsverhältnis der Emission der Quotient aus der Gesamtintensität im ersten Spektralbereich und der Gesamtintensität im zweiten Spektralbereich ist;

das Abklingzeitverhältnis der Quotient aus der Gesamtabklingzeit im ersten Spektralbereich und der Gesamtabklingzeit im zweiten Spektralbereich ist; und

die Abklingzeitsumme die Summe der Gesamtabklingzeit im ersten Spektralbereich und der Gesamtabklingzeit im zweiten Spektralbereich ist.

3. Wertdokumentsystem nach Anspruch 1 oder 2, wobei die unterschiedlichen Intensitätsverhältnisse der Emission, die unterschiedlichen Abklingzeitverhältnisse und/ oder die unterschiedlichen Abklingzeitsummen in den Spektralbereichen A, B des jeweils ersten und zweiten Wertdokuments einer Kodierung des Sicherheitsmerkmals und/ oder einer Wertdokumentenkennung des ersten und/ oder zweiten Wertdokuments zugeordnet sind.

4. Wertdokumentsystem nach einem der vorhergehenden Ansprüche, wobei die ersten und zweiten Lumineszenzstoffe des Sicherheitsmerkmals des ersten Wertdokuments und der erste Lumineszenzstoff des Sicherheitsmerkmals des zweiten Wertdokuments als Emissionszentren die Seltenerden Nd, Yb oder Er als Dotierstoff aufweisen.

5. Wertdokumentsystem nach einem der vorhergehenden Ansprüche, **dadurch gekennzeichnet, dass** die Lumineszenzstoffe der zweiten Stoffklasse ausgewählt sind aus dotierten Lanthanoxysulfiden, Yttriumoxysulfiden, Gadoliniumoxysulfiden, Lutetiumoxysulfiden, darauf basierenden Mischoxysulfiden; und / oder dotierten Lanthanphosphaten, Yttriumphosphaten, Gadoliniumphosphaten, Lutetiumphosphaten, darauf basierenden Mischphosphaten; und/ oder Lanthanvanadaten, Yttriumvanadaten, Gadoliniumvanadaten, Lutetiumvanadaten, und / oder darauf basierenden Mischvanadaten.

6. Wertdokumentsystem nach einem der vorhergehenden Ansprüche, wobei der Überlappungsgrad der teilweise überlappenden Emissionsspektren größer als 5% und kleiner als 80% ist.

7. Wertdokumentsystem nach einem der vorhergehenden Ansprüche, wobei das Sicherheitsmerkmal des zweiten Wertdokuments eine Kombination des ersten Lumineszenzstoffs aus der ersten Stoffklasse mit einem zweiten Lumineszenzstoff aus der zweiten Stoffklasse aufweist oder eine Kombination des ersten Lumineszenzstoffs aus der zweiten Stoffklasse mit einem zweiten Lumineszenzstoff aus der ersten Stoffklasse aufweist, wobei die ersten und zweiten Lumineszenzstoffe des zweiten Wertdokuments

    i. teilweise überlappende Emissionsspektren aufweisen;
    ii. gemeinsam bei einer Wellenlänge anregbar sind;
    iii. jeweils eine Abklingzeit von weniger als 5 ms aufweisen.

8. Wertdokumentsystem nach einem der vorhergehenden Ansprüche, wobei die ersten und zweiten Lumineszenzstoffe des Sicherheitsmerkmals des ersten Wertdokuments sowie der erste und, soweit vorhanden, zweite Lumineszenzstoff des zweiten Wertdokuments gemeinsam bei einer Wellenlänge anregbar sind.

9. Wertdokumentsystem nach einem der vorhergehenden Ansprüche, wobei der erste und/oder zweite Lumineszenzstoff des Sicherheitsmerkmals des ersten Wertdokuments die gleichen Matrizen verwenden wie der erste Lumineszenzstoff und/oder zweite Lumineszenzstoff des Sicherheitsmerkmals des zweiten Wertdokuments.

10. Wertdokumentsystem nach einem der vorhergehenden Ansprüche, wobei der erste und zweite Lumineszenzstoff des Sicherheitsmerkmals des ersten Wertdokuments und der erste Lumineszenzstoff des zweiten Wertdokuments das gleiche Seltenerd als Emissionszentrum verwenden.

11. Wertdokumentsystem nach einem der vorhergehenden Ansprüche, **dadurch gekennzeichnet, dass** die jeweilige Abklingzeit des ersten und zweiten Lumineszenzstoffs des Sicherheitsmerkmals des ersten Wertdokuments und des ersten und gegebenenfalls zweiten Lumineszenzstoffs des Sicherheitsmerkmals des zweiten Wertdokuments wenigstens 0,05 ms beträgt.

12. Wertdokumentsystem nach einem der vorhergehenden Ansprüche, **dadurch gekennzeichnet, dass** der erste und zweite Lumineszenzstoff des Sicherheitsmerkmals des ersten Wertdokuments sich in ihrer Abklingzeit um weniger als 10% unterscheiden.

13. Wertdokumentsystem nach einem der Ansprüche 1 bis 11, **dadurch gekennzeichnet, dass** der erste und zweite Lumineszenzstoff des Sicherheitsmerkmals des ersten Wertdokuments sich in der Abklingzeit um 10% bis 50% unterscheiden oder um wenigstens 50%, vorzugsweise um mehr als 75% besonders bevorzugt um mehr als 100% unterscheiden, bezogen auf die kürzeste individuelle Abklingzeit der Lumineszenzstoffe.

14. Verfahren zum Identifizieren eines Wertdokuments eines Wertdokumentsystems nach einem der Ansprüche 1 bis 13, umfassend die Schritte:

b. Anregen des ersten und, soweit vorhanden, zweiten Lumineszenzstoffs des Sicherheitsmerkmals;

c. Detektieren des zeitlichen Verlaufs einer Gesamtintensität der emittierten Strahlungen des ersten und, soweit vorhanden, zweiten Lumineszenzstoffs in wenigstens zwei spektral unterschiedlichen Detektionskanälen, wobei die Detektionskanäle jeweils zumindest einen Teilbereich des primären Emissionsbereichs des ersten und, soweit vorhanden, zweiten Lumineszenzstoffs umfassen; Bestimmen einer Abklingzeit und/ oder Intensität in den wenigstens zwei Detektionskanälen; und

d. Identifizieren einer Wertdokumentklasse aus dem Sicherheitsmerkmal auf Basis der bestimmten einen oder mehreren Abklingzeiten und/oder Intensitäten und/ oder Intensitätsverhältnisse und/oder Abklingzeitverhältnisse des primären Emissionsbereichs.

15. Lumineszenzstoff-Set zur Herstellung eines Wertdokumentsystems nach einem der Ansprüche 1 bis 13, umfassend den ersten Lumineszenzstoff des ersten Wertdokuments, den zweiten Lumineszenzstoff des ersten Wertdokuments und den ersten Lumineszenzstoff des zweiten Wertdokuments und gegebenenfalls den zweiten Lumineszenzstoff des zweiten Wertdokuments.

**Claims**

1. Value document system, comprising at least a first value document and a second value document, wherein

the first value document has a security feature from a combination of at least a first and a second luminescent substance, wherein

i. the first luminescent substance of the security feature of the first value document is a luminescent substance of a first substance class, namely doped garnet structures, and is selected from doped yttrium aluminum garnets (YAG), lutetium aluminum garnets (LuAG), gadolinium gallium garnets (GGG), gadolinium scandium gallium garnets (GSGG), yttrium scandium gallium garnets (YSGG), calcium niobium gallium garnets (CNGG), gadolinium scandium aluminum garnets (GSAG), calcium lithium niobium gallium garnets (CLNGG), transition metal-containing garnet structures, in particular yttrium iron garnets (YIG), or mixed variants of these garnet structures;

ii. the second luminescent substance of the security feature of the first value document is a luminescent substance of a second substance class, namely chosen from doped rare earth oxysulfides, doped rare earth phosphates and doped rare earth vanadates;

iii. the first and the second luminescent substance of the security feature of the first value document have partially overlapping emission spectra;

iv. the first and the second luminescent substance of the security feature of the first value document are excitable together at one wavelength;

v. the first and the second luminescent substance of the security feature of the first value document have a decay time of less than 5 ms; and

vi. the first and second luminescent substance of the security feature of the first value document are formed such that their primary emission region of the partially overlapping emission spectra can be divided into two different, directly adjacent spectral ranges, namely a first and a second spectral range (A, B), which have a width of at least 50 nm and at most 500 nm, the primary emission region lying in the IR range, i.e., between 700 nm and 2000 nm;

vii. both the first luminescent substance of the security feature of the first value document and the second luminescent substance of the security feature of the first value document require at least one dopant from the group Nd, Yb, Er, Tm, Ho;

the second value document has a security feature with at least a first luminescent substance from the first substance class or from the second substance class with a decay time of less than 5 ms, whose emission lies at least partially in at least one of the adjacent spectral ranges A, B;

the security feature of the first value document as compared to the security feature of the second value document has at least a different intensity ratio of the emission, a different decay time ratio and/or a different decay time sum in the two adjacent spectral ranges A, B.

2. Value document system according to claim 1, wherein the intensity ratio of the emission is the quotient of the overall intensity in the first spectral range and the overall intensity in the second spectral range;

the decay time ratio is the quotient of the overall decay time in the first spectral range and the overall decay time in the second spectral range; and
the decay time sum is the sum of the overall decay time in the first spectral range and the overall decay time in the second spectral range.

3. Value document system according to claim 1 or 2, wherein the different intensity ratios of the emission, the different decay time ratios and/or the different decay time sums in the spectral ranges A, B of the respective first and second value documents are assigned to a coding of the security feature and/or a value document identifier of the first and/or second value document.

4. Value document system according to one of the preceding claims, wherein the first and second luminescent substances of the security feature of the first value document and the first luminescent substance of the security feature of the second value document have as emission centers the rare earths Nd, Yb or Er as dopant.

5. Value document system according to one of the preceding claims, **characterized in that** the luminescent substances of the second substance class are selected from doped lanthanum oxysulfides, yttrium oxysulfides, gadolinium oxysulfides, lutetium oxysulfides, mixed oxysulfides based thereon; and/or doped lanthanum phosphates, yttrium phosphates, gadolinium phosphates, lutetium phosphates, mixed phosphates based thereon; and/or lanthanum vanadates, yttrium vanadates, gadolinium vanadates, lutetium vanadates, and/or mixed vanadates based thereon.

6. Value document system according to one of the preceding claims, wherein the degree of overlap of the partially overlapping emission spectra is greater than 5% and smaller than 80%.

7. Value document system according to one of the preceding claims, wherein the security feature of the second value document has a combination of the first luminescent substance from the first substance class with a second luminescent substance from the second substance class, or has a combination of the first luminescent substance from the second substance class with a second luminescent substance from the first substance class, wherein the first and second luminescent substances of the second value document

i. have partially overlapping emission spectra;
ii. are excitable together at one wavelength;
iii. each have a decay time of less than 5 ms.

8. Value document system according to one of the preceding claims, wherein the first and second luminescent substances of the security feature of the first value document, as well as the first and, if present, second luminescent substance of the second value document, are excitable together at one wavelength.

9. Value document system according to one of the preceding claims, wherein the first and/or second luminescent substance of the security feature of the first value document use the same matrices as the first luminescent substance and/or second luminescent substance of the security feature of the second value document.

10. Value document system according to one of the preceding claims, wherein the first and second luminescent substance of the security feature of the first value document and the first luminescent substance of the second value document use the same rare earth as emission center.

11. Value document system according to one of the preceding claims, **characterized in that** the respective decay time of the first and second luminescent substance of the security feature of the first value document and of the first and, if appropriate, second luminescent substance of the security feature of the second value document is at least 0.05 ms.

12. Value document system according to one of the preceding claims, **characterized in that** the first and second luminescent substance of the security feature of the first value document differ in their decay time by less than 10%.

**13.** Value document system according to one of claims 1 to 11, **characterized in that** the first and second luminescent substance of the security feature of the first value document differ in the decay time by 10% to 50% or by at least 50%, preferably by more than 75%, particularly preferably by more than 100%, based on the shortest individual decay time of the luminescent substances.

**14.** Method for identifying a value document of a value document system according to one of claims 1 to 13, comprising the steps:

b) exciting the first and, if present, second luminescent substance of the security feature;

c) detecting the temporal course of an overall intensity of the emitted radiations of the first and, if present, second luminescent substance in at least two spectrally different detection channels, the detection channels each comprising at least a subregion of the primary emission region of the first and, if present, second luminescent substance; determining a decay time and/or intensity in the at least two detection channels; and

d) identifying a value document class from the security feature on the basis of the determined one or more decay times and/or intensities and/or intensity ratios and/or decay time ratios of the primary emission region.

**15.** Luminescent substance set for producing a value document system according to one of claims 1 to 13, comprising the first luminescent substance of the first value document, the second luminescent substance of the first value document and the first luminescent substance of the second value document and, where appropriate, the second luminescent substance of the second value document.

## Revendications

**1.** Système de documents de valeur, comprenant au moins un premier document de valeur et un second document de valeur, dans lequel

le premier document de valeur présente une caractéristique de sécurité issue d'une combinaison d'au moins une première et une seconde substance luminescente, dans lequel

i. la première substance luminescente de la caractéristique de sécurité du premier document de valeur est une substance luminescente d'une première classe de substances, à savoir des structures grenat dopées, et est sélectionnée parmi des grenats d'yttrium-aluminium (YAG), des grenats de lutécium-aluminium (LuAG), des grenats de gadolinium-gallium (GGG), des grenats de gadolinium-scandium-gallium (GSGG), des grenats d'yttrium-scandium-gallium (YSGG), des grenats de calcium-niobium-gallium (CNGG), des grenats de gadolinium-scandium-aluminium (GSAG), des grenats de calcium-lithium-niobium-gallium (CLNGG), des structures grenat contenant des métaux de transition, en particulier des grenats d'yttrium-fer (YIG), ou des variantes mixtes de ces structures grenat;

ii. la seconde substance luminescente de la caractéristique de sécurité du premier document de valeur est une substance luminescente d'une deuxième classe de substances, à savoir choisie parmi des oxysulfures de terres rares dopés, des phosphates de terres rares dopés et des vanadates de terres rares dopés;

iii. la première et la seconde substance luminescente de la caractéristique de sécurité du premier document de valeur présentent des spectres d'émission se chevauchant partiellement;

iv. la première et la seconde substance luminescente de la caractéristique de sécurité du premier document de valeur sont excitables conjointement à une longueur d'onde;

v. la première et la seconde substance luminescente de la caractéristique de sécurité du premier document de valeur présentent un temps de décroissance inférieur à 5 ms; et

vi. la première et la seconde substance luminescente de la caractéristique de sécurité du premier document de valeur sont conçues de manière que leur domaine d'émission primaire des spectres d'émission partiellement chevauchants soit divisible en deux plages spectrales différentes, immédiatement adjacentes, à savoir une première et une seconde plage spectrale (A, B), lesquelles présentent une largeur d'au moins 50 nm et au maximum 500 nm, le domaine d'émission primaire se situant dans le domaine IR, c.-à-d. entre 700 nm et 2000 nm;

vii. tant la première substance luminescente de la caractéristique de sécurité du premier document de valeur que la seconde substance luminescente de la caractéristique de sécurité du premier document de valeur nécessitent au moins un dopant du groupe Nd, Yb, Er, Tm, Ho ;

le second document de valeur présente une caractéristique de sécurité avec au moins une première substance luminescente de la première classe de substances ou de la deuxième classe de substances avec un temps de décroissance inférieur à 5 ms, dont l'émission se situe au moins partiellement dans au moins une des plages spectrales adjacentes A, B;
la caractéristique de sécurité du premier document de valeur par rapport à la caractéristique de sécurité du second document de valeur présente au moins un rapport d'intensité de l'émission différent, un rapport des temps de décroissance différent et/ou une somme des temps de décroissance différente dans les deux plages spectrales adjacentes A, B.

2. Système de documents de valeur selon la revendication 1, dans lequel le rapport d'intensité de l'émission est le quotient de l'intensité totale dans la première plage spectrale et de l'intensité totale dans la seconde plage spectrale ; le rapport des temps de décroissance est le quotient du temps de décroissance total dans la première plage spectrale et du temps de décroissance total dans la seconde plage spectrale ; et la somme des temps de décroissance est la somme du temps de décroissance total dans la première plage spectrale et du temps de décroissance total dans la seconde plage spectrale.

3. Système de documents de valeur selon la revendication 1 ou 2, dans lequel les différents rapports d'intensité de l'émission, les différents rapports des temps de décroissance et/ou les différentes sommes des temps de décroissance dans les plages spectrales A, B du premier et du second document de valeur respectifs sont associés à un codage de la caractéristique de sécurité et/ou à un identifiant de document de valeur du premier et/ou du second document de valeur.

4. Système de documents de valeur selon l'une des revendications précédentes, dans lequel les première et seconde substances luminescentes de la caractéristique de sécurité du premier document de valeur et la première substance luminescente de la caractéristique de sécurité du second document de valeur ont comme centres d'émission les terres rares Nd, Yb ou Er en tant que dopants.

5. Système de documents de valeur selon l'une des revendications précédentes, **caractérisé en ce que** les substances luminescentes de la deuxième classe de substances sont sélectionnées parmi des oxysulfures de lanthane dopés, des oxysulfures d'yttrium dopés, des oxysulfures de gadolinium dopés, des oxysulfures de lutécium dopés, des oxysulfures mixtes basés sur ceux-ci ; et/ou des phosphates de lanthane dopés, des phosphates d'yttrium dopés, des phosphates de gadolinium dopés, des phosphates de lutécium dopés, des phosphates mixtes basés sur ceux-ci ; et/ou des vanadates de lanthane, des vanadates d'yttrium, des vanadates de gadolinium, des vanadates de lutécium, et/ou des vanadates mixtes basés sur ceux-ci.

6. Système de documents de valeur selon l'une des revendications précédentes, dans lequel le degré de chevauchement des spectres d'émission se chevauchant partiellement est supérieur à 5 % et inférieur à 80 %.

7. Système de documents de valeur selon l'une des revendications précédentes, dans lequel la caractéristique de sécurité du second document de valeur présente une combinaison de la première substance luminescente de la première classe de substances avec une seconde substance luminescente de la deuxième classe de substances ou présente une combinaison de la première substance luminescente de la deuxième classe de substances avec une seconde substance luminescente de la première classe de substances, les première et seconde substances luminescentes du second document de valeur

   i. présentant des spectres d'émission se chevauchant partiellement;
   ii. étant excitables conjointement à une longueur d'onde;
   iii. présentant chacune un temps de décroissance inférieur à 5 ms.

8. Système de documents de valeur selon l'une des revendications précédentes, dans lequel les première et seconde substances luminescentes de la caractéristique de sécurité du premier document de valeur ainsi que la première et, le cas échéant, la seconde substance luminescente du second document de valeur sont excitables conjointement à une longueur d'onde.

9. Système de documents de valeur selon l'une des revendications précédentes, dans lequel la première et/ou la seconde substance luminescente de la caractéristique de sécurité du premier document de valeur utilisent les mêmes matrices que la première substance luminescente et/ou la seconde substance luminescente de la caractéristique de sécurité du second document de valeur.

**10.** Système de documents de valeur selon l'une des revendications précédentes, dans lequel la première et la seconde substance luminescente de la caractéristique de sécurité du premier document de valeur et la première substance luminescente du second document de valeur utilisent la même terre rare comme centre d'émission.

**11.** Système de documents de valeur selon l'une des revendications précédentes, **caractérisé en ce que** le temps de décroissance respectif de la première et de la seconde substance luminescente de la caractéristique de sécurité du premier document de valeur et de la première et éventuellement de la seconde substance luminescente de la caractéristique de sécurité du second document de valeur est d'au moins 0,05 ms.

**12.** Système de documents de valeur selon l'une des revendications précédentes, **caractérisé en ce que** la première et la seconde substance luminescente de la caractéristique de sécurité du premier document de valeur diffèrent dans leur temps de décroissance de moins de 10 %.

**13.** Système de documents de valeur selon l'une des revendications 1 à 11, **caractérisé en ce que** la première et la seconde substance luminescente de la caractéristique de sécurité du premier document de valeur diffèrent dans le temps de décroissance de 10 % à 50 % ou d'au moins 50 %, de préférence de plus de 75 %, préférentiellement de plus de 100 %, par rapport au plus court temps de décroissance individuel des substances luminescentes.

**14.** Procédé pour identifier un document de valeur d'un système de documents de valeur selon l'une des revendications 1 à 13, comprenant les étapes :

b) exciter la première et, le cas échéant, la seconde substance luminescente de la caractéristique de sécurité ;
c) détecter l'évolution temporelle d'une intensité totale des rayonnements émis de la première et, le cas échéant, de la seconde substance luminescente dans au moins deux canaux de détection spectralement différents, les canaux de détection comprenant chacun au moins une sous-région du domaine d'émission primaire de la première et, le cas échéant, de la seconde substance luminescente ; déterminer un temps de décroissance et/ou une intensité dans les au moins deux canaux de détection ; et
d) identifier une classe de document de valeur à partir de la caractéristique de sécurité sur la base du ou des temps de décroissance et/ou des intensités et/ou des rapports d'intensité et/ou des rapports des temps de décroissance du domaine d'émission primaire déterminés.

**15.** Ensemble de substances luminescentes pour la fabrication d'un système de documents de valeur selon l'une des revendications 1 à 13, comprenant la première substance luminescente du premier document de valeur, la seconde substance luminescente du premier document de valeur et la première substance luminescente du second document de valeur et, le cas échéant, la seconde substance luminescente du second document de valeur.

Fig. 1 A

Fig. 1 B

EP 3 850 594 B1

Fig. 2

Fig 3 A

Fig 3 B

Fig 3 C

Fig 3 D

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2512821 B1
- EP 2271504 B1
- WO 2006024530 A1
- US 2010026991 A1
- US 9046486 B2